# EUROPÄISCHE PATENTSCHRIFT

(11) **EP 2 857 841 B1**
(45) Veröffentlichungstag und Bekanntmachung des Hinweises auf die Patenterteilung: **21.04.2021**
(21) Anmeldenummer: 13004811.9
(22) Anmeldetag: 07.10.2013
(51) Int. Cl.: G01N 35/00

(54) **Laborgerät zur gerätegesteuerten Behandlung mindestens einer Laborprobe, und ein Verfahren zur Konfiguration des Laborgeräts mittels der Konfigurationssteuerung**
Laboratory device for the device-controlled treatment of at least one laboratory sample, and a method for the configuration of the laboratory device by means of the configuration control
Appareil de laboratoire pour le traitement commandé par un appareil d'au moins un échantillon de laboratoire et procédé de configuration d'un appareil de laboratoire au moyen de la commande de configuration

(43) Veröffentlichungstag der Anmeldung: 08.04.2015
(73) Patentinhaber: EPPENDORF AG, 22339 Hamburg (DE)
(72) Erfinder: Goemann-Thoss, Wolfgang Dr., 22339 Hamburg (DE); Wente, Wolf Dr., 22339 Hamburg (DE); Thieme, Andreas, 22339 Hamburg (DE); Frerichs, Jan-Gerd, 22339 Hamburg (DE); Markau, Christiane, 22339 Hamburg (DE); Hacker, Jan-Hendrik, 22339 Hamburg (DE)
(74) Vertreter: Ricker, Mathias

(56) Entgegenhaltungen:
- EP-A1- 0 952 452
- EP-A1- 2 299 277
- EP-A2- 0 973 115
- EP-A2- 1 840 576
- WO-A1-94/11838
- US-A1- 2003 141 116
- US-A1- 2006 173 575

## Beschreibung

Die Erfindung bezieht sich auf ein Laborgerät mit der Konfigurationssteuerung zur gerätegesteuerten Behandlung mindestens einer Laborprobe, und ein Verfahren zur Konfiguration des Laborgeräts mittels der Konfigurationssteuerung.

Laborgeräte werden verwendet, um in chemischen, biologischen, biochemischen, medizinischen oder forensischen Laboratorien Laborproben, insbesondere flüssige Laborproben, mit hoher Effizienz zu bearbeiten. Solche Laborgeräte automatisieren Behandlungsschritte zumindest teilweise, die sonst manuell durchgeführt werden müssten, und steigern auf diese Weise die Geschwindigkeit, Präzision und Zuverlässigkeit dieser Behandlungen. Eine Behandlung von zumeist flüssigen Laborproben kann darauf gerichtet sein, diese Laborproben, insbesondere deren Zusammensetzung, physikalisch, chemisch, biochemisch oder auf andere Weise zu ändern oder zu untersuchen oder zu analysieren.

Bei der Bedienung der genannten Laborgeräte werden vom Benutzer in der Regel eine Vielzahl von Hardware- und/oder Softwareeinstellungen vorgenommen, bevor die gewünschte Behandlung einer Probe durchgeführt werden kann. Das betrifft einerseits Einstellungen, durch die die allgemeine Arbeitsweise des Geräts beeinflusst wird, und betrifft andererseits Einstellungen, die sich direkt auf die gewünschte Behandlung auswirken sollen bzw. diese definieren. Die Laborgeräte weisen meist eine Behandlungseinrichtung zur gerätegesteuerten Behandlung der mindestens einen Laborprobe auf. Sie weisen oft eine Programmsteuerung auf, mittels der ein Benutzer des Laborgeräts die durchzuführende Behandlung durch Einstellen der gewünschten Programmparameter festlegen kann. Die Einstellung der Programmparameter erfolgt über eine Bedieneinheit des Laborgeräts, welche die Ein- und Ausgabe von Informationen, insbesondere von Werten der Programmparameter ermöglicht.

Benutzerfehler bei der Eingabe von Parametern sind ein kontinuierlich die Ergebnisqualität und Produktivität eines Labors mindernder Faktor.

Aufgabe der vorliegenden Erfindung ist es, das Laborgerät mit Konfigurationssteuerung und ein Verfahren zur Konfiguration des Laborgeräts mittels der Konfigurationssteuerung bereitzustellen, mit dem sich die Produktivität in einem Labor verbessern lässt.

Die Erfindung löst diese Aufgabe insbesondere durch das Laborgerät gemäß Anspruch und das Verfahren nach Anspruch 11. Bevorzugte Ausgestaltungen sind insbesondere Gegenstände der Unteransprüche.

Durch die Verwendung von benutzerabhängigen Konfigurationsdaten entfällt für den Benutzer die Anforderung, die durch die benutzerabhängigen Konfigurationsdaten bewirkte Konfiguration des Laborgeräts vollständig manuell durchführen zu müssen. Andererseits kann durch die Bereitstellung der Konfigurationssteuerung eine benutzerabhängige Gestaltung der Elemente einer Benutzerschnittstelleneinrichtung, insbesondere von Bedienungselementen des Laborgeräts, insbesondere der Benutzeroberfläche einer Anzeigeneinrichtung, erfolgen. Durch solche Maßnahmen lassen sich Eingabefehler reduzieren und die Produktivität in einem Labor steigern.

Unter einer **Konfiguration** eines Geräts wird das Festlegen mindestens eines veränderbaren Parameters verstanden, der sich auf die Funktionsweise des Geräts auswirkt. Diese Auswirkung kann zeitlich begrenzt sein, oder kann dauerhaft sein, kann von anderen Bedingungen, insbesondere Parametern abhängen. Vorzugsweise ist das Festlegen des mindestens einen Parameters ein wiederholbarer Vorgang, insbesondere unbeschränkt wiederholbar. Der Vorgang kann aber auch ein einmaliges Festlegen eines Parameters bezeichnen.

Unter einer **Konfigurationssteuerung** wird ein Gerät oder ein Gerätbestandteil verstanden, dessen Funktion(en) sich auf die Konfiguration des Geräts, oder eines anderen Geräts, insbesondere des Laborgeräts, auswirken. Die Konfigurationssteuerung ist über Schnittstelleneinrichtungen mit diesem anderen Gerät verbunden oder verbindbar. Die Konfigurationssteuerung kann ein getrenntes oder ein vom anderen Gerät, insbesondere Laborgerät, abtrennbares Gerät sein, also ein Modul. Es ist aber insbesondere bevorzugt, dass die Konfigurationssteuerung in das andere Gerät, insbesondere das Laborgerät, insbesondere in die Steuereinrichtung des anderen Geräts, insbesondere des Laborgeräts, integriert ist. Insbesondere kann die Steuereinrichtung der Konfigurationssteuerung in das andere Gerät, insbesondere das Laborgerät, insbesondere in die Steuereinrichtung des anderen Geräts, insbesondere des Laborgeräts, integriert sein. Eine, mehrere oder alle Funktionen der Konfigurationssteuerung können als Softwarefunktionen realisiert sein. Eine, mehrere oder alle Funktionen der Konfigurationssteuerung können insbesondere als ausführbarer Programmcode realisiert sein, der von einer Steuereinrichtung ausführbar ist.

**Konfigurationsdaten** sind Daten, mit denen die Konfiguration eines konfigurierbaren Geräts, insbesondere des Laborgeräts, beeinflussbar, insbesondere festlegbar ist.

Konfigurationsdaten können insbesondere **Gerätedaten** sein. Unter Gerätedaten werden Daten verstanden, mit denen die Funktionsweise eines Geräts, insbesondere des erfindungsgemäßen Laborgeräts, beeinflussbar, insbesondere festlegbar ist. Gerätedaten sind vorzugsweise dazu geeignet, die Steuerung der Anzeige einer optional vorgesehenen Benutzerschnittstelle des erfindungsgemäßen Laborgeräts zu beeinflussen.

Ein Laborgerät, insbesondere dessen Steuereinrichtung, ist vorzugsweise dazu eingerichtet, vor dem Starten einer Behandlung den Ablauf der Behandlung zu konfigurieren. Dies kann insbesondere mittels eines Methodenprogramms erfolgen. Für die Durchführung der Behandlung muss in der Regel mindestens ein Parameter bestimmt werden, insbesondere vom Benutzer. Es ist aber auch möglich, dass das Laborgerät, und/oder die Konfigurationssteuerung dazu eingerichtet ist/sind, diesen mindestens einen Parameter zu bestimmen, insbesondere benutzerabhängig festzulegen. Der mindestens eine Parameter kann ein Programmparameter, insbesondere Nutzerparameter sein.

Der Begriff "Behandlung" bedeutet insbesondere, dass eine Laborprobe, die zumeist flüssig ist, bewegt, und/oder transportiert, und/oder untersucht und/oder verändert wird, insbesondere in ihrer Zusammensetzung, physikalisch, chemisch, biochemisch oder auf andere Weise verändert wird.

Der Konfigurationsvorgang für eine individuelle Behandlung ist von der Art der Behandlung abhängig. Vorzugsweise ist der Konfigurationsvorgang für eine individuelle Behandlung benutzerabhängig. Das Laborgerät, insbesondere dessen Steuereinrichtung, ist vorzugsweise dazu eingerichtet, anhand der Konfigurationsdaten den Konfigurationsvorgang für eine individuelle Behandlung benutzerabhängig durchzuführen. Es ist möglich, dass für dieselbe Art der Behandlung ein benutzerabhängiger Konfigurationsvorgang für eine individuelle Behandlung erfolgt. Dabei kann dem Benutzer eine benutzerabhängige Auswahl an Nutzerparametern zur Einstellung angeboten werden und/oder eine benutzerabhängige Benutzeroberfläche angezeigt werden. Die Konfigurationsdaten, insbesondere die Gerätedaten, können unter anderem den Ablauf der Konfiguration einer Behandlung bestimmen, indem sie insbesondere ein Methodenprogramm beeinflussen, das für die gewählte Art der Behandlung charakteristisch ist. Die Gerätedaten beeinflussen vorzugsweise die Gestaltung der Benutzeroberfläche, die von einer Anzeigeneinrichtung, insbesondere einem Display, im Betrieb des Laborgeräts, insbesondere während der Definition einer Behandlung, insbesondere eines Methodenprogramms, angezeigt wird. Diese Anzeigeneinrichtung ist insbesondere Bestandteil der Konfigurationssteuerung oder einer Benutzerschnittstelleneinrichtung, die Bestandteil der Konfigurationssteuerung, des Laborgeräts oder einer externen Datenverarbeitungseinrichtung sein kann.

Gerätedaten sind vorzugsweise keine solchen Daten, mit denen die Durchführung einer Behandlung direkt beeinflusst oder definiert wird. Gerätedaten sind vorzugsweise keine Methodendaten und/oder keine Programmparameter und/oder keine Nutzerparameter.

Konfigurationsdaten können aber auch Daten sein, oder solche Daten aufweisen, mit denen beim erfindungsgemäßen Laborgerät die individuelle, geplante Behandlung der mindestens einen Laborprobe, insbesondere die Steuerung der mindestens einen Behandlungseinrichtung eines Laborgeräts, beeinflussbar, insbesondere festlegbar ist. Solche Daten werden vorliegend auch als Methodendaten bezeichnet. Diese Beeinflussung, insbesondere Festlegung, erfolgt vorzugsweise zumindest für eine geplante Behandlung. Sie kann aber auch während einer Behandlung erfolgen. Vorzugsweise erfolgt die Festlegung der Konfigurationsdaten vor dem Start einer Behandlung. Sie kann auch während der Behandlung oder danach erfolgen. Konfigurationsdaten können Programmparameter sein oder können Programmparameter bestimmen.

Vorbestimmte benutzerabhängige Konfigurationsdaten sind vorzugsweise in einer Speichereinrichtung gespeichert. Diese kann Bestandteil der Konfigurationssteuerung sein, des Laborgeräts, und/oder einer externen Datenverarbeitungseinrichtung, insbesondere eines Computers, insbesondere Servers. Die Steuereinrichtung des erfindungsgemäßen Laborgeräts ist dazu eingerichtet, während des Betriebs eines Laborgeräts durch einen Benutzer, insbesondere während der Festlegung der manuellen Konfiguration durch einen Benutzer, Konfigurationsdaten zu erfassen und als benutzerabhängige Konfigurationsdaten zu speichern, insbesondere in der Speichereinrichtung. Der Benutzer kann diese Konfigurationsdaten dann aus der Speichereinrichtung in ein anderes Laborgerät übertragen, wenn er auf dem anderen Laborgerät diese Konfigurationsdaten verwenden will. Er erspart es sich dabei, alle Konfigurationsdaten erneut manuell einzustellen.

Es ist auch möglich, dass einem Benutzer benutzerabhängige Konfigurationsdaten in Abhängigkeit von seiner Rolle zugewiesen werden, die ihm beim Einloggen in das Laborgerät zugewiesen wurde.

**Benutzerabhängige Vorgehensweise** bedeutet, dass in Abhängigkeit von einem Benutzer, insbesondere einer Klasse, Gruppe oder Rolle des Benutzers, die unter verschiedenen Aspekten unterschieden werden kann, oder benutzerindividuell vorgegangen wird. Eine benutzerabhängige Anzeige in der Benutzeroberfläche bedeutet insbesondere, dass eine bestimmte Benutzeroberfläche, insbesondere Abfragemaske, eingesetzt wird, die diesem Benutzer zugeordnet ist.

Die Benutzerklasse oder **Rolle** kann über eine Datenbank ermittelt werden. Für ein Individuum kann sich die Benutzerklasse durch seine fachliche Qualifikation, seine berufliche Stellung im Unternehmen oder durch die Zuordnung nach einem anderen Kriterium ergeben. Das Kriterium kann auch an eine Messung gebunden sein, die durch mindestens einen Sensor durchgeführt wird, der mit der Steuereinrichtung signalverbunden ist und der Bestandteil des Laborautomaten sein kann. Diese Messung kann insbesondere einen personengebundenen Messparameter bestimmen, insbesondere einen Körperparameter der Person ermitteln. Durch diese Information ist es insbesondere möglich, das Laborgerät an das Körpermaß anzupassen, z.B. die Körperhöhe der Person, um z.B. automatisch eine Einstellung des Laborgeräts automatisch an dieses Körpermaß anzupassen. Das kann zu einer verbesserten Ergonomie führen. Der Sensor kann auch ein Mikrofon aufweisen, mit dem die Sprache des Benutzers erfasst, insbesondere aufgezeichnet wird. Die Sprachdaten können für die Erstellung einer Protokolldatei verwendet werden und/oder ausgewertet werden. Vorzugsweise weist die Konfigurationssteuerung, insbesondere deren Steuereinrichtung eine Spracherkennungseinrichtung auf. Die vom Sensor erfasste Sprache kann mittels der Spracherkennungseinrichtung analysiert und ausgewertet werden, wobei Sprachdaten ermittelt werden. Die Sprachdaten können verwendet werden, um ein Steuerungskommando zu erfassen, mit dem die Steuerung des Laborgeräts und/oder der Konfigurationssteuerung beeinflusst werden kann. Die Sprachdaten können insbesondere ausgewertet werden, um die Sprache des Benutzers zu ermitteln. In Abhängigkeit von der Sprache kann die Benutzeroberfläche angepasst werden, indem die auf der Benutzeroberfläche angezeigten Texte und/der die über einen Lautsprecher des Laborgeräts ausgegebene Sprache der durch die Sprachanalyse ermittelten Sprache angepasst wird.

Die Erfindung betrifft insbesondere eine benutzerabhängige Benutzeroberfläche, insbesondere benutzerabhängige Abfragemaske und ein Verfahren zur Benutzerführung, insbesondere zum benutzerabhängigen Abfragen von Nutzerparametern mittels dieser benutzerabhängigen Benutzeroberfläche.

Eine Benutzeroberfläche ist eine grafische Benutzeroberfläche, die vorzugsweise auf dem Bildschirm der Benutzerschnittstelleneinrichtung anzeigbar ist oder angezeigt wird. Der Bildschirm kann insbesondere ein berührungsempfindlicher Bildschirm ("touch screen") sein. Die Benutzeroberfläche kann eine Anzeigenseite sein, mit der Informationen angezeigt und/oder eingelesen werden.

Eine Abfragemaske ist eine Anzeigenseite zur Anzeige in einem Bildschirm der Benutzerschnittstelleneinrichtung, mit mindestens einem Anzeigebereich zur Anzeige des variablen Wertes eines Programmparameters bzw. Nutzerparameters. Eine solche Anzeigenseite weist statische Bereiche auf, die ??? sich während der Anzeige innerhalb der Anzeigenseite nicht verändern. Eine solche Anzeigenseite der Abfragemaske weist ferner mindestens einen Anzeigebereich auf, dessen Darstellung während der Anzeige innerhalb der Anzeigenseite veränderlich ist, indem sich z.B. der Wert automatisch ändert, z.B. bei Anzeige einer Uhrzeit in diesem Anzeigebereich, oder in Abhängigkeit von einer Benutzereingabe ändert, z.B. die Anzeige eines Wertes eines Nutzerparameters oder eines anderen Programmparameters. Ein Nutzerparameter ist ein vom Nutzer gewählter Programmparameter. Ein Programmparameter ist ein solcher Parameter, der von der Steuereinrichtung zur Steuerung einer Behandlung verwendet wird. Ein Nutzerparameter wird auch als erster Programmparameter bezeichnet, bzw. als Programmparameter der ersten Art bezeichnet. Als zweite Programmparameter werden solche Programmparameter bezeichnet, die nicht vom Benutzer eingegeben werden. Zweite Programmparameter werden von der Steuereinrichtung festgelegt, durch Berechnung oder durch Werte, die vorbestimmt sind und in einem Datenspeicher gespeichert sind. Vorzugsweise ist die Konfigurationssteuerung dazu ausgebildet, die Konfiguration des Laborgeräts so zu steuern, dass anhand der benutzerabhängigen Konfigurationsdaten festgelegt wird, welche ersten Programmparameter und welche zweiten Programmparameter bei der Festlegung einer Behandlung, insbesondere bei der Definition eines Methodenprogramms, zur Verwendung kommen. Dadurch können insbesondere einem unerfahrenen Benutzer eine geringere Anzahl an ersten Programmparametern zur Auswahl überlassen werden als einem erfahrenen Benutzer, und es können andererseits insbesondere einem unerfahrenen Benutzer eine größere Anzahl an zweiten Programmparametern vorgegeben werden als einem erfahrenen Benutzer. Dadurch werden dem unerfahrenen Benutzer weniger Fehler bei der Bedienung des Laborgeräts unterlaufen, und für den erfahreneren Benutzer wird eine größere Flexibilität bei der Bedienung des Laborgeräts ermöglicht. Beide Maßnahmen werden die Produktivität in einem Labor erhöhen und die Kosten senken.

Die Anzeigenseite kann selber beweglich sein, indem sie zum Beispiel im Bildschirm gescrollt werden kann, insbesondere im Zusammenhang mit einer nur ausschnittweisen Darstellung.

Eine **Datenverbindung** verbindet insbesondere zwei datenverarbeitende Einheiten, insbesondere zwei Datenverarbeitungseinrichtungen, in der Weise, dass Daten zwischen den Einheiten ausgetauscht werden können, entweder unidirektional oder bidirektional. Die Datenverbindung kann leitungsgebunden realisiert sein, oder drahtlos, insbesondere als Funkverbindung. Eine **Datenfernverbindung** verbindet insbesondere zwei datenverarbeitende Einheiten, insbesondere zwei Datenverarbeitungseinrichtungen, die entfernt voneinander angeordnet sind, die also insbesondere nicht Bestandteil desselben Geräts, insbesondere derselben Konfigurationssteuerung, Zugriffssteuerung, Benutzerschnittstelleneinrichtung oder desselben Laborgeräts sind, falls die genannten Geräte als separate Geräte ausgeführt sind. Eine Datenverbindung, insbesondere eine Datenfernverbindung, eines Geräts mit einem anderen Gerät wird vorzugsweise über eine direkte Verbindung der beiden Geräte realisiert, oder eine mittelbare Verbindung der beiden Geräte, so dass ein drittes Gerät zwischen die beiden Geräte geschaltet ist, um die Daten weiterzuvermitteln. Eine Datenfernverbindung kann insbesondere über ein Netzwerk aus Computern realisiert sein, bei denen die über die Datenfernverbindung verbundenen Geräte über das Netzwerk verbunden sind. Das Netzwerk kann ein beschränktes Netzwerk sein, z.B. ein Intranet, oder kann ein weltweites Netzwerk sein, insbesondere das Internet.

Vorzugsweise ist in einer **ersten bevorzugten Gestaltung** der Konfigurationssteuerung die mindestens eine Schnittstelleneinrichtung der Konfigurationssteuerung zur Herstellung mindestens einer dritten Datenverbindung mit mindestens einer externen Datenverarbeitungseinrichtung, insbesondere einem Server, ausgebildet, das insbesondere eine Speichereinrichtung aufweist, auf der Konfigurationsdaten speicherbar sind. Vorzugsweise ist die Steuereinrichtung der Konfigurationssteuerung dazu ausgebildet, Konfigurationsdaten über die mindestens eine dritte Datenverbindung zu empfangen.

Vorzugsweise ist in einer zweiten bevorzugten Gestaltung der Konfigurationssteuerung, die insbesondere die erste Gestaltung aufweist, die Steuereinrichtung der Konfigurationssteuerung dazu ausgebildet, die über die wenigstens eine dritte Datenverbindung empfangenen Konfigurationsdaten auszuwerten, und dem identifizierten Benutzer benutzerabhängige Konfigurationsdaten zuzuordnen, die zur benutzerabhängigen Behandlung der mindestens einen Laborprobe verwendbar sind.

Vorzugsweise ist in einer dritten bevorzugten Gestaltung der Konfigurationssteuerung, die insbesondere die erste oder zweite Gestaltung aufweist, die Steuereinrichtung der Konfigurationssteuerung dazu ausgebildet, über die wenigstens eine dritte Datenverbindung Identifizierungsdaten, die den Benutzer identifizieren, an die mindestens eine externe Datenverarbeitungseinrichtung zu senden und die dem identifizierten Benutzer zugeordneten Konfigurationsdaten als diese benutzerabhängigen Konfigurationsdaten für das Laborgerät von der externen Datenverarbeitungseinrichtung zu empfangen.

Vorzugsweise weist in einer vierten bevorzugten Gestaltung der Konfigurationssteuerung, die insbesondere die erste, zweite oder dritte Gestaltung aufweist, die Konfigurationssteuerung eine Benutzerschnittstelleneinrichtung auf, um dem identifizierten Benutzer den Zugriff auf das Laborgerät zu ermöglichen. Vorzugsweise ist die Zugriffssteuerung dazu eingerichtet, dem identifizierten Benutzer mittels der Benutzerschnittstelleneinrichtung den Zugriff auf den Laborautomaten über die erste Datenverbindung zu ermöglichen.

Vorzugsweise ist in einer fünften bevorzugten Gestaltung der Konfigurationssteuerung, die insbesondere die erste, zweite, dritte oder vierte Gestaltung aufweist, die Zugriffssteuerung dazu eingerichtet ist, dem identifizierten Benutzer den Zugriff auf das Laborgerät, insbesondere auf mindestens eine Funktion des Laborgeräts, nur dann zu ermöglichen. Gemäß einer sechsten bevorzugten Gestaltung der Konfigurationssteuerung, die insbesondere die erste, zweite, dritte, vierte oder fünfte Gestaltung aufweist, ist die Zugriffssteuerung dazu eingerichtet, dem identifizierten Benutzer den Zugriff auf das Laborgerät nur dann zu ermöglichen, wenn wenigstens eine vorbestimmte Zugriffsbedingung in Bezug auf den identifizierten Benutzer erfüllt ist. Diese Zugriffsbedingung kann das Ergebnis der Überprüfung der Rolle des Benutzers verwenden, der Qualifikation des Benutzers, eines Reservierungseintrags in einer Reservierungsdatenbank, einer Zeit, und/oder einer Abfrage zur Freigabe über eine Datenverbindung, die vom Laborgerät durchgeführt wird.

Die Erfindung betrifft ein Laborgerät zur gerätegesteuerten Behandlung mindestens einer Laborprobe gemäß Anspruch 1.

Vorzugsweise ist in einer ersten bevorzugten Gestaltung des erfindungsgemäßen Laborgeräts, die Steuereinrichtung des Laborgerätes dazu ausgebildet, in Abhängigkeit von dem identifizierten Benutzer benutzerabhängige Konfigurationsdaten zu verwenden, insbesondere Gerätedaten. Die Konfigurationsdaten bestimmen vorzugsweise einen Satz von benutzerabhängigen Programmparametern, mit dem eine programmgesteuerte Behandlung mittels der Behandlungseinrichtung benutzerabhängig gesteuert werden kann.

Vorzugsweise weist in einer zweiten bevorzugten Gestaltung des erfindungsgemäßen Laborgeräts, das insbesondere die erste Gestaltung des Laborgeräts aufweist, das Laborgerät eine Benutzerschnittstelleneinrichtung auf zur Eingabe von Daten durch den Benutzer. Vorzugsweise weist die Benutzerschnittstelleneinrichtung mindestens eine Anzeigeeinrichtung zur Anzeige von Informationen für den Benutzer in mindestens einer grafischen Benutzeroberfläche auf, wobei die Steuereinrichtung insbesondere dazu ausgebildet ist, die Anzeigeneinrichtung derart zu steuern, dass in Abhängigkeit von dem identifizierten Benutzer und unter Verwendung der benutzerabhängigen Konfigurationsdaten eine benutzerabhängige Gestaltung der Benutzeroberfläche verwendet wird.

Vorzugsweise ist in einer dritten bevorzugten Gestaltung des erfindungsgemäßen Laborgeräts, das insbesondere die zweite Gestaltung des Laborgeräts aufweist, die Steuereinrichtung des Laborgeräts dazu eingerichtet, die Behandlung in Abhängigkeit von mindestens einem von einem Benutzer gewählten Nutzerparameter zu steuern und, insbesondere, mindestens einen Nutzerparameter in einem benutzerabhängigen Abfragevorgang mittels der Benutzerschnittstelleneinrichtung zu erfassen, indem
i) dem Benutzer mindestens eine benutzerabhängige, also z.B. abhängig von einer Benutzerklasse, z.B. Qualifikation, oder auch individuell abhängige, Abfragemaske, also insbesondere Anzeigenseite mit mindestens einem Anzeigebereich zur Anzeige des variablen Wertes eines Programmparameters bzw. Nutzerparameters, auf der Benutzeroberfläche angezeigt wird, und vorzugsweise
ii) durch Erfassen mindestens einer Eingabe des Benutzers in der mindestens einen Abfragemaske mindestens ein Nutzerparameter erfasst wird.

Die Erfindung betrifft ferner ein System zur gerätegesteuerten Behandlung mindestens einer Laborprobe, aufweisend mindestens ein erfindungsgemäßes Laborgerät und mindestens eine externe Datenverarbeitungseinrichtung, insbesondere einen Server, die zum Austausch von Daten, insbesondere Konfigurationsdaten, miteinander verbunden sind.

Vorzugsweise weist in einer ersten bevorzugten Gestaltung des erfindungsgemäßen Systems, das System mindestens ein erstes und ein zweites erfindungsgemäßes Laborgerät auf, die jeweils dazu eingerichtet sind, erste benutzerabhängige Konfigurationsdaten zu verarbeiten, die zur benutzerabhängigen Steuerung des ersten Laborgerätes verwendbar sind, und die auch zur benutzerabhängigen Steuerung des zweiten Laborgerätes verwendbar sind.

Vorzugsweise weist in einer zweiten bevorzugten Gestaltung des erfindungsgemäßen Systems, das insbesondere die erste Gestaltung des Systems aufweist, das System eine externe Datenverarbeitungseinrichtung auf, und das eine Benutzerschnittstelleneinrichtung aufweist, die Bestandteil der externen Datenverarbeitungseinrichtung sein kann, wobei mit der Benutzerschnittstelleneinrichtung aus den Eingaben des Benutzers benutzerabhängige Konfigurationsdaten erzeugt werden können.

Eine **Steuereinrichtung** weist im Rahmen der vorliegenden Erfindung generell insbesondere eine Datenverarbeitungseinrichtung, insbesondere eine Recheneinheit (CPU) zum Verarbeiten von Daten und/oder einen Mikroprozessor auf oder ist eine Datenverarbeitungseinrichtung. Eine Recheneinheit der Steuereinrichtung eines Laborgeräts ist vorzugsweise auch zum Steuern des Behandlungsprozesses und/oder der individuellen Behandlungen eingerichtet.

Die Steuereinrichtung des Laborgeräts und/oder die Zugriffssteuerung und/oder die optionale Benutzerschnittstelleneinrichtung können -insbesondere alle- in einer physikalischen Geräteinheit integriert sein, können aber jeweils auch eine eigene physikalischen Geräteinheit sein. Eine physikalische Geräteinheit kann insbesondere ein Modul sein, das mit dem Laborgerät verbunden ist oder verbindbar ist. Die Steuereinrichtung des Laborgeräts und/oder die Zugriffssteuerung und/oder die optionale Benutzerschnittstelleneinrichtung oder Bestandteile dieser Komponenten können auch durch Softwarefunktionen implementiert sein, oder können insbesondere als Programmcode vorliegen. Ein Laborgerät kann z.B. einen Computer aufweisen, der in Kombination mit Softwarefunktionen die Steuereinrichtung des Laborgeräts und/oder die optionale Zugriffssteuerung und/oder die optionale Benutzerschnittstelleneinrichtung jeweils zumindest teilweise implementiert. Ist z.B. die Zugriffssteuerung in das Laborgerät integriert, kann die Zugriffssteuerung selber Teil der Steuereinrichtung des Laborgeräts sein bzw. mittels der Steuereinrichtung implementiert sein, insbesondere durch Softwarefunktionen, insbesondere zumindest teilweise als ausführbarer Programmcode.

Eine **Kommunikationseinrichtung** ist vorzugsweise eingerichtet für das Senden und/oder Empfangen von Daten, insbesondere den Datenaustausch, über eine durch die Kommunikationseinrichtung bereitgestellte Datenverbindung, insbesondere eine Datenfernverbindung mit einem entfernten Gerät. Insbesondere wird das bezüglich eines Laborgeräts entfernt angeordnete Gerät auch bezeichnet als "Remote-Gerät" oder externes Gerät. Insbesondere wird eine Datenverarbeitungseinrichtung, die nicht Bestandteil eines Laborgeräts ist, auch als externe Datenverarbeitungseinrichtung bezeichnet. Die Datenverbindung, insbesondere Datenfernverbindung, kann über ein beschränktes (insbesondere ein Intranet) oder weltweites (insbesondere das Internet) Netzwerk aus Computern aufgebaut werden. Die Datenverbindung, insbesondere Datenfernverbindung, kann auch über eine Funkverbindung aufgebaut werden. Die Datenverbindung, insbesondere Datenfernverbindung, kann insbesondere über eine Mobilfunkverbindung aufgebaut werden.

Jeder Benutzer kann über dieselbe **Benutzerschnittstelleneinrichtung** in eine erste Datenverbindung mit der Zugriffssteuerung treten, oder mehrere Benutzer können über unterschiedliche Benutzerschnittstelleneinrichtungen in eine erste Datenverbindung mit der Zugriffssteuerung treten. Eine Benutzerschnittstelleneinrichtung kann Bestandteil der Zugriffssteuerung sein. Eine Zugriffssteuerung kann Bestandteil der Benutzerschnittstelleneinrichtung sein. Eine Benutzerschnittstelleneinrichtung kann Bestandteil eines Laborgeräts sein. Eine Benutzerschnittstelleneinrichtung weist jeweils vorzugsweise auf: eine Steuereinrichtung für eine Benutzerschnittstelleneinrichtung; eine Kommunikationseinrichtung zur Herstellung einer Datenverbindung mit einem Laborgerät über eine Schnittstelleneinrichtung desselben; eine Eingabeeinrichtung zur Erfassung von Benutzereingaben eines Benutzers; eine Ausgabeeinrichtung, insbesondere eine Anzeige und/oder ein Display, zur Ausgabe von Informationen an den Benutzer. Dabei ist die Steuereinrichtung der Benutzerschnittstelleneinrichtung vorzugsweise dazu eingerichtet, über die Datenverbindung Daten mit dem Laborgerät auszutauschen, die aus den Benutzereingaben gewonnen wurden, und die im erfindungsgemäßen Laborgerät bewirken, dass dem zweiten Benutzer am erfindungsgemäßen Laborgerät Berechtigungen und/oder Zugriffsrechte erteilt werden, so dass ein gleichzeitiges Angemeldet-sein und/oder der gleichzeitige Zugriff eines ersten und wenigstens eines zweiten Benutzers am erfindungsgemäßen Laborgerät über die Schnittstelleneinrichtung mit jeweils zugewiesenen Zugriffsrechten auf Funktionen des Laborgerätes, steuerbar ist.

Die **Zugriffssteuerung** erlaubt es bei einem Laborgerät, den Zugriff eines oder mehrerer weiterer Benutzer am Laborgerät zu steuern, während ein erster Benutzer bereits angemeldet ist und dessen Sitzung am Laborgerät noch läuft, also während des Zugriffs des weiteren Benutzers noch aktiv ist. Durch diese Ausgestaltung lässt sich das Laborgerät effizienter nutzen und die Produktivität des Labors verbessern. Die Zugriffssteuerung kann in die Steuereinrichtung des Laborgeräts integriert sein. Die Zugriffssteuerung kann als Modul ausgebildet sein. Die Zugriffssteuerung kann ein Bestandteil der Konfigurationssteuerung sein. Die Konfigurationssteuerung kann ein Bestandteil der Zugriffssteuerung sein. Zugriffssteuerung und Konfigurationssteuerung können in einem Modul angeordnet sein.

Ein Modul kann insbesondere die Zugriffssteuerung und/oder die Konfigurationssteuerung und/oder eine Benutzerschnittstelleneinrichtung aufweisen. Ein Modul ist ein von anderen Geräten getrenntes, und/oder ein vom anderen Gerät, insbesondere Laborgerät, abtrennbares Gerät. Ein Laborgerät kann eine Verbindungseinrichtung aufweisen, durch die das Modul mit dem Laborgerät verbindbar ist, insbesondere mittels einer vom Benutzer lösbaren Verbindung. Ein Modul kann portabel sein, also von einem Benutzer transportierbar. Das Modul kann auch fest mit dem Laborgerät verbunden sein. Die modulare Bauweise bietet Vorteile bei der Herstellung von Laborgeräten. Ein portables Modul bietet eine größere Flexibilität bei der Benutzung eines Laborgeräts.

Bevorzugte Ausgestaltungen der Zugriffssteuerung und des Laborgeräts mit dieser Zugriffssteuerung werden im Rahmen der Beschreibung der vorliegenden Erfindung genannt oder lassen sich dort entnehmen.

Die Zugriffssteuerung ist vorzugsweise dazu eingerichtet, während der Sitzung des ersten Benutzers die Anfrage des mindestens einen weiteren Benutzers nach einer Anmeldung an der Zugriffssteuerung, insbesondere den Zugriff auf mindestens eine Funktion des Laborgeräts zu steuern, insbesondere der Anfrage stattzugeben (Zugriff erlaubt) oder die Anfrage abzulehnen (Zugriff verweigert).

Die Zugriffssteuerung ist eine zur Datenverarbeitung ausgebildete Einrichtung, die vorliegend auch als "access control device" bezeichnet wird. Sie dient der Zugriffskontrolle (englisch: "access control"). Die Zugriffssteuerung weist eine Steuereinrichtung auf. Die Steuereinrichtung ist zur Datenverarbeitung ausgebildet. Die Steuereinrichtung ist insbesondere eine elektronische Steuereinrichtung. Sie weist vorzugsweise eine Datenverarbeitungseinrichtung auf, die insbesondere elektronisch ist.

Die **Datenverarbeitungseinrichtung** weist vorzugsweise eine Recheneinheit auf, insbesondere eine CPU, ferner vorzugsweise mindestens eine Datenspeichereinrichtung, insbesondere zur zeitweisen und/oder dauerhaften Speicherung von Daten. Die Datenverarbeitungseinrichtung ist vorzugsweise dazu ausgebildet, über die erste Schnittstelleneinrichtung eine oder mehrere erste Datenverbindungen mit einer oder mehreren Benutzerschnittstelleneinrichtungen herzustellen die insbesondere Bestandteile der Konfigurationssteuerung, der Zugriffssteuerung und/oder des Laborgerätes sein kann/können; vorzugsweise über die zweite Schnittstelleneinrichtung eine zweite Datenverbindung mit dem Laborgerät herzustellen; und vorzugsweise Zugriffsrechte für den Zugriff von Benutzern über die Benutzerschnittstelleneinrichtungen und die ersten und zweiten Datenverbindungen auf Funktionen des Laborgerätes zu steuern; wobei vorzugsweise die Zugriffsrechte so gesteuert werden können, dass ein gleichzeitiger Zugriff (Eingeloggt sein) eines ersten und wenigstens eines weiteren Benutzers mit jeweils getrennt zugewiesenen Zugriffsrechten auf Funktionen des Laborgerätes, erfolgt.

Eine **Schnittstelleneinrichtung** dient der Verbindung von zwei Einrichtungen, die jeweils Signale, insbesondere Informationen, insbesondere Daten, verarbeiten können, insbesondere senden und/oder empfangen können. Eine Schnittstelleneinrichtung kann mindestens eine Hardwareschnittstelle beinhalten und/oder mindestens eine Softwareschnittstelle.

**Hardwareschnittstellen** sind insbesondere Schnittstellen zwischen elektrisch arbeitenden Einheiten, gemäß dem üblichen Verständnis in der Elektrotechnik und Elektronik. Vorliegend bezeichnet der Begriff "Hardwareschnittstelle" insbesondere auch die Verbindungskomponenten zwischen wenigstens zwei elektrisch arbeitenden Einheiten selbst, also insbesondere alle Bestandteile, die diese Verbindung ermöglichen, z.B. integrierte Schaltkreise, Elektronik und Leitungen, über die zwischen den wenigstens zwei elektrisch arbeitenden Einheiten elektrische Signale versandt werden. Diese zwei elektrisch arbeitenden Einheiten können insbesondere ein Laborgerät und eine externe Datenverarbeitungseinrichtung sein, oder zwei Laborgeräte, oder zwei elektrisch arbeitenden Einheiten innerhalb eines Laborgeräts. Eine Hardwareschnittstelle muss nicht, aber kann eine lösbare Verbindungseinrichtung zum Lösen und/oder Wiederherstellen dieser Verbindung aufweisen, insbesondere mindestens einen Stecker.

**Softwareschnittstellen,** insbesondere softwareseitige Datenschnittstellen, sind insbesondere logische Berührungspunkte in einem Informationsverwaltungssystem, insbesondere Softwaresystem: Sie ermöglichen und regeln den Austausch von Kommandos und Daten zwischen verschiedenen Prozessen und Komponenten. Softwareschnittstellen können nur zur Kommunikation benutzte, datenorientierte Schnittstellen sein. In diesem Fall enthält die Softwareschnittstelle lediglich die Informationen, die zwischen beteiligten Systemteilen ausgetauscht werden.

Die Zugriffssteuerung ist vorzugsweise dazu eingerichtet, die Zugriffsrechte zu steuern, indem die Steuereinrichtung eine Datenverbindung mit einer Datenbank für Zugriffsrechte verwendet. Die Datenbank für Zugriffsrechte ist vorzugsweise in mindestens einer, vorzugsweise in genau einer, Speichereinrichtung für Zugriffsrechte gespeichert. Die mindestens eine Speichereinrichtung für Zugriffsrechte kann in der Zugriffssteuerung angeordnet sein, und/oder kann in einer externen Datenverarbeitungseinrichtung angeordnet sein. Extern bedeutet, dass das Gerät, hier die Datenverarbeitungseinrichtung, nicht Bestandteil der in Rede stehenden Vorrichtung, hier der Zugriffssteuerung ist. Die Datenbank für Zugriffsrechte kann zentral gespeichert sein, kann aber auch in mehreren Speichereinrichtungen gespeichert sein, die jeweils Teile der Daten der Datenbank aufweisen können oder eine Kopie der Daten der Datenbank aufweisen können.

Eine -insbesondere **externe- Datenverarbeitungseinrichtung** kann ein Computer sein, insbesondere ein Server sein oder kann einen Computer, insbesondere Server aufweisen, der insbesondere zur Herstellung einer Datenverbindung zu mehr als einer Zugriffssteuerung und/oder mehr als einem Laborgerät eingerichtet ist. Eine - insbesondere **externe- Datenverarbeitungseinrichtung** kann einen Computer oder Mikroprozessor aufweisen. Ein Server ist insbesondere ein Computer, dessen Hardware vorzugsweise auf Serveranwendungen abgestimmt ist. Eine externe Datenverarbeitungseinrichtung kann eine mobile Datenverarbeitungseinrichtung sein, die zur Herstellung einer drahtlosen Datenverbindung eingerichtet ist, insbesondere einer Datenverbindung über ein begrenztes oder weltweites Rechnernetz. Ein Rechnernetz ist ein Zusammenschluss verschiedener technischer, primär selbstständiger elektronischer Systeme (insbesondere Computer, aber auch Sensoren, Aktoren, Agenten und/oder sonstiger funktechnischer Komponenten usw.), der die Kommunikation der einzelnen Systeme untereinander ermöglicht.

Die Zugriffssteuerung kann eine **Kommunikationseinrichtung** zur Herstellung einer Datenverbindung mit einer externen Datenverarbeitungseinrichtung, insbesondere über die erste, zweite oder eine andere Schnittstelleneinrichtung der Zugriffssteuerung aufweisen. Die Zugriffssteuerung ist vorzugsweise dazu ausgebildet, die Zugriffsrechte unter Verwendung der Datenverbindung zu der externen Datenverarbeitungseinrichtung herzustellen, insbesondere über die erste, zweite oder eine andere Schnittstelleneinrichtung der Zugriffssteuerung. Die externe Datenverarbeitungseinrichtung weist vorzugsweise die Datenbank für Zugriffsrechte zumindest teilweise oder vollständig auf.

Die Zugriffssteuerung, insbesondere eine Steuereinrichtung der Zugriffssteuerung, ist vorzugsweise dazu eingerichtet, Berechtigungen und/oder Zugriffsrechte für den Zugriff von Benutzern über die Benutzerschnittstelleneinrichtungen und die ersten und zweiten Datenverbindungen auf Funktionen des Laborgerätes zu steuern. Dadurch wird eine benutzerabhängige Nutzung des Laborgeräts möglich, die in Abhängigkeit von den jeweils vergebenen Zugriffsrechten gesteuert wird. Insbesondere wird eine gleichzeitige Nutzung des Laborgeräts durch mindestens einen ersten und mindestens einen zweiten Benutzer möglich.

Die Zugriffssteuerung ("access control device") führt die Zugriffskontrolle ("access control") aus. Der Begriff "Zugriffskontrolle" bezeichnet insbesondere Verfahren zur Verwaltung der Anfrage (englisch: "requests") nach Ressourcen und/oder Daten, die durch ein Informationsverwaltungssystem verwaltet werden, und zur Verwaltung der Entscheidungen, wie die Anfrage gehandhabt wird, insbesondere ob Zugriff gewährt wird oder nicht, und/oder in welcher Weise Zugriff gewährt wird oder nicht. Das Informationsverwaltungssystem kann insbesondere ein Betriebssystem sein, das auf der Zugriffssteuerung ausgeführt wird. Wenn der Benutzer eines Informationsverwaltungssystems eine bestimmte Operation auf einer bestimmten Ressource und/oder mit bestimmten Daten durchführen möchte, entscheidet die Zugriffskontrolle, ob diese Anfrage tatsächlich zugelassen oder abgelehnt werden soll. Eine Zugriffskontrollentscheidung (ja/nein) bezieht sich insbesondere auf ein Zugangssteuerungstriplett ("access control triple") bestehend aus "Subjekt", "Objekt" und "Operation".

Als Subjekt wird insbesondere eine aktive Entität eines Systems bezeichnet, die eine bestimmte Operation auf einem bestimmten Objekt durchführen möchte. Eine Entität bezeichnet in diesem Zusammenhang eine eindeutig bestimmbare Einheit, über die Informationen gespeichert und/oder verarbeitet werden sollen. Die Einheit kann materiell oder immateriell, konkret oder abstrakt sein. Subjekte sind insbesondere menschliche Benutzer eines Informationsverwaltungssystems oder Computerprogramme, die von menschlichen Nutzern zur Erfüllung von Aufgaben eingesetzt werden. Ein Subjekt kann auch eine Gruppe von Nutzern sein, z.B. Laborarbeiter, Servicetechniker, Administrator. Die Gruppe fasst demnach mehrere individuelle Subjekte zusammen.

Ein Benutzer kann ein Individuum repräsentieren, oder eine Gruppe von mehreren Individuen, oder eine Klasse von Individuen, die gemäß einer Klassenregel oder Rollenregel ausgewählt wurden.

Die Zugriffssteuerung kann vorzugsweise den mindestens einen ersten Benutzer und den mindestens einen zweiten Benutzer voneinander unterscheiden. Ein Benutzer wird von der Zugriffssteuerung vorzugsweise eindeutig identifiziert. Dazu verarbeitet die Zugriffssteuerung vorzugsweise Identifizierungsdaten. Vorzugsweise ist die Zugriffssteuerung dazu ausgebildet, den anfragenden Benutzer zu authentifizieren, das heißt, ein Nachweisverfahren durchzuführen, mit dem die **Authentizität** des anfragenden Benutzers überprüft wird und der Benutzer authentisiert wird, falls der Nachweis positiv ist. Authentifizierungsdaten enthalten zum Beispiel einen Logintext und einen Passworttext, oder einen Datensatz zur Gesichtserkennung oder zum Iris-Scan oder zum Fingerabdruckscan etc.. Die Authentifizierung kann ferner mittels RFID Chips oder NFC Chip, oder über Gestenerkennung erfolgen. Eine Authentifizierung kann insbesondere per Direktzugriff auf das Laborgerät bzw. dessen Zugriffssteuerung vor Ort erfolgen oder per Fernzugriff.

Die Zugriffssteuerung weist vorzugsweise ein **Informationsverwaltungssystem** auf, mit dem die Zugriffskontrolle realisiert wird. Das Informationsverwaltungssystem ist vorzugsweise ein Betriebssystem eines Laborgeräts und/oder von dessen Zugriffssteuerung, mit dem die Zugriffssteuerung und/oder das Laborgerät betrieben wird.

Die Zugriffssteuerung ist vorzugsweise dazu ausgebildet, den **anfragenden Benutzer,** insbesondere mehrere anfragende Benutzer, insbesondere den mindestens einen ersten Benutzer und den mindestens einen zweiten Benutzer, an der Zugriffssteuerung, insbesondere am Informationsverwaltungssystem der Zugriffssteuerung anzumelden. Der Anmeldevorgang wird auch als Einloggen bezeichnet. Vorzugsweise erhält der erfolgreich angemeldete Benutzer vorbestimmte Berechtigungen und/oder Zugriffsrechte. Die Anmeldung kann vom Benutzer selber aufgehoben werden oder aufgrund anderer Bedingungen aufgehoben werden, z.B. durch das gerätegesteuerte Abmelden des Benutzers, insbesondere bei Überschreiten einer maximalen Anmeldezeit, in der der Benutzer ohne Unterbrechung über die Zugriffssteuerung eingeloggt war, oder nach einer vorbestimmten Zeit der Inaktivität, oder in Abhängigkeit vom Zeitpunkt des Endes einer vom Benutzer ausgeführten Behandlung, oder aufgrund einer individuellen Methodenprogrammierung. Das Aufheben der Anmeldung bedeutet vorzugsweise, dass die bei der Anmeldung gewährte Autorisierung wieder entzogen wird.

Das Einloggen in das Informationsverwaltungssystem erfolgt vorzugsweise dadurch, dass der Benutzer authentifiziert wird. Nach erfolgter Authentifizierung erhält der Benutzer zum Einloggen einen personalisierten Zugang zu dem Informationsverwaltungssystem, mit Berechtigungen und/oder Zugriffsrechten, die mittels der Datenbank für Zugriffsrechte ermittelt werden. Mit dem Login beginnt eine Sitzung, die durch ein Logout, auch bezeichnet als Abmelden, beendet wird.

Die Zugriffssteuerung ist vorzugsweise dazu ausgebildet, die Verwendung der Berechtigungen, Operationen und Objekte an dem Laborgerät, bzw. die Funktionen und Dienste des Laborgeräts, das die Zugriffssteuerung aufweist, in Abhängigkeit von den vorbestimmten Zugriffsrechten freizugeben, d.h. den authentifizierten Benutzer zu autorisieren. Die Zugriffssteuerung ist vorzugsweise Software-gesteuert, insbesondere programmgesteuert. Vorzugsweise wird als Anwendungsprotokoll bei der Implementierung der Softwarefunktionen LDAP eingesetzt (Lightweight Directory Access Protocol).

Als Objekt wird bei einem Zugriff bzw. bei einem Zugriffsversuch insbesondere eine passive Entität bezeichnet, auf der eine Operation durchgeführt werden soll. Objekte werden auch als "Ressourcen" bezeichnet. Objekte können z.B. sein: Daten oder Datensammlungen, d.h. Dateien, Datenobjekte in Datenbanken, z.B. Tabellen oder Spalten), Dienste oder Funktionen, insbesondere solche Dienste oder Funktionen, die mit der Zugriffssteuerung und/oder dem Laborgerät durchführbar sind. Solche Dienste können z.B. bezeichnen das Verfügbarmachen einer Kalenderdatenbank, wobei diese Verwendung die Anzeige von Kalenderdaten, die Lese- und/oder Schreibrechte an der Kalenderdatenbank vorsehen kann. Solche Dienste und Funktionen können z.B. bezeichnen eine Nachrichtenfunktion, mittels der Benutzern Nachrichten übersandt werden können, die insbesondere Informationen über die Verfügbarkeit des Laborgeräts in einem bestimmten Kalenderzeitraum enthalten können. Eine solche Funktion wäre insbesondere auch das Verfügbarmachen der Ausführung einer Behandlung, was insbesondere beinhalten kann, die dafür notwendigen Zugriffsrechte zu erteilen. Eine Funktion kann z.B. das Einschalten einer UV-Beleuchtung des Laborgeräts sein oder das Öffnen einer Gehäusetüre eines Laborgerätegehäuses.

Als Operationen werden Vorgänge bezeichnet, die auf einem Objekt ausgeführt werden. Operationen können insbesondere Funktionen sein, insbesondere Funktionen der Zugriffssteuerung oder des Laborgeräts. Mehrere Funktionen können auf einem Objekt ausgeführt werden. Ist das Objekt eine Datei, sind mögliche Operationen das Schreiben, Lesen, Hinzufügen, Verändern, Kopieren oder Löschen von Daten. Ist das Objekt ein Dienst oder eine Funktion, so kann Ausführen die einzige mögliche Operation sein. Die Menge der möglichen Operationen hängt von der Art des Objekts ab. Die Mengen der Operationen, die von einzelnen Subjekten auf dem gleichen Objekt durchgeführt werden können, können unterschiedlich sein.

Ein bestimmtes Objekt in Kombination mit einer bestimmten Operation wird insbesondere als Berechtigung bezeichnet. Als "Leseberechtigung" lässt sich z.B. die Kombination aus der Operation "Lesen" mit dem Objekt "Datei" verstehen, als "Ausführungsberechtigung" lässt sich z.B. die Operation "Ausführen" mit dem Objekt "Funktion" verstehen.

Die Zugriffskontrolle kann insbesondere als Erlaubnisfunktion formuliert werden, formal beschrieben durch
*Erlaubnis_für(Subjekt, Objekt, Operation) → (ja, nein).*

Wird dieser Funktion das Triple an Parametern (Subjekt, Objekt, Operation) übergeben, so liefert die Erlaubnisfunktion entweder "ja" (Zugriff gewährt) oder "nein" (Zugriff verweigert) zurück.

Es ist auch möglich, bei dieser Erlaubnisfunktion einen weiteren Eingabeparameter vorzusehen, der eine weitere Bedingung für die Zugriffsentscheidung liefert. Diese Bedingung kann z.B. den Zweck bezeichnen, zu dem ein bestimmter Zugriff erfolgen soll. Ferner ist es möglich, dass die Erlaubnisfunktion nicht -oder nicht nur- die ja/nein-Entscheidung über die Zugriffserlaubnis zurückliefert, sondern eine Auflage (auch "Obligation") zurückliefert, in Abhängigkeit von der über die Zugriffserlaubnis entschieden wird. Dadurch kann insbesondere eine "Erlaubnis unter Vorbehalt" definiert werden. Eine solche Obligation ist insbesondere bereits vor dem Zugriff bzw. Zugriffsversuch erfüllt, kann aber auch während -oder nach- dem Zugriff oder der zu erlaubenden Operation erfüllt werden.

Die Zugriffskontrolle kann gemäß einem oder mehrerer spezieller Datenmodelle erfolgen. Ein solches spezielles Datenmodell ist insbesondere das Zugriffskontrollmodell (ZKM, Access Control Model (ACM)). Die Zugriffskontrolle kann insbesondere einen sogenannten Referenz-Monitor aufweisen. Diese Komponente ist insbesondere als funktioneller Kern der Zugriffssteuerung zu verstehen. Der Referenz-Monitor erfüllt die Funktion der Entscheidung, ob der von einem Subjekt gewünschte Zugriff auf ein Objekt gewährt wird. Vorzugsweise ist von der Zugriffssteuerung kein Zugriff auf eine Ressource des Laborgeräts freigebbar, ohne dass der Referenz-Monitor benutzt wird. Der Referenz-Monitor erfüllt vorzugsweise auch die Funktion, die erfolgten Zugriffsversuche aufzuzeichnen.

Die Datenbank über Zugriffsrechte enthält vorzugsweise Informationen in Form von Daten darüber, welche Operationen, insbesondere abhängig von einem bestimmten Zeitpunkt oder Zeitraum, für ein Objekt verfügbar sind. Dadurch kann insbesondere festgelegt werden, ob für einen Benutzer zu einem bestimmten Zeitpunkt und/oder in einem bestimmten Zeitraum der Zugriff auf die mindestens eine Behandlungseinrichtung erlaubt wird, insbesondere ob zu einem bestimmten Zeitpunkt und/oder in einem bestimmten Zeitraum das Recht vergeben wird, eine Behandlung am Laborgerät zu starten oder zu ändern, wobei das Laborgerät mit der Zugriffssteuerung über die zweite Datenverbindung verbindbar ist und/oder verbunden ist.

Die Datenbank über Zugriffsrechte enthält vorzugsweise Informationen in Form von Daten darüber, welche Berechtigungen an den anfragenden Benutzer vergeben werden können, insbesondere in Abhängigkeit von möglichen Rechten aufgrund einer Gruppenzugehörigkeit und/oder Rollenzugehörigkeit.

Die Zugriffskontrolle ist vorzugsweise gemäß einem oder auch gemäß mehrerer der bekannten Grundformen DAC ("Discretionary Access Control"), MAC ("Mandatory Access Control") oder RBAC ("Role-Based Access Control") ausgestaltet, wobei RBAC besonders bevorzugt ist.

Das RBAC-Modell sieht vor, dass einzelnen Subjekten nicht direkt Rechte zugewiesen werden sondern indirekt über sogenannte "Rollen". Ein möglicher, im Rahmen der Gestaltung der Zugriffssteuerung anwendbarer Standard des RBAC Modell ist detailliert beschrieben im US Standard ANSI INCITS 359-2004. Die Zugriffssteuerung kann zumindest teilweise als RBAC-Modell ausgebildet sein, insbesondere zumindest teilweise gemäß dem genannten US Standard.

Vorzugsweise sieht die Zugriffskontrolle den Einsatz mindestens einer Rolle vor, vorzugsweise mehrerer Rollen, wobei insbesondere in der Rolle jeweils Rechte zusammengefasst sind. Die mindestens eine Rolle ist vorzugsweise in der Datenbank für Zugriffsrechte gespeichert. Eine Rolle ist insbesondere geeignet, angepasst an eine Zuständigkeit oder eine Aufgabenbeschreibung im Rahmen des Einsatzes eines Laborgeräts, insbesondere innerhalb des Unternehmens, welches das Laborgerät einsetzt, und/oder beim Unternehmen, das einen Wartungsvertrag über das Laborgerät erfüllt, indem er z.B. Diagnosefunktionen am Laborgerät ausführt, und/oder beim Hersteller des Laborgeräts, der z.B. Firmware-Aktualisierungen, Kalibrierungen oder Informationen über das Laborgerät und/oder dessen Zubehör über die Zugriffssteuerung direkt an das Laborgerät zu übersenden. Solche Rollen können insbesondere Rechte zusammenfassen. Anstatt für jeden Benutzer einen Satz an Einzelrechten zu speichern, kann ihm mindestens eine Rolle zugeordnet werden. Die Rollenzuweisung ist besonders zuverlässig in der Umsetzung und erfordert relativ wenig Aufwand, insbesondere Verwaltungsaufwand beim Ermitteln und Speichern der Rechte.

Vorzugsweise sieht die Zugriffskontrolle mindestens zwei, vorzugsweise mehrere **Rollen** vor. Mögliche Rollen sind insbesondere Administrator ("Admin"), Wartungsdienst ("Maintenance"), normaler Labor-Benutzer ("LabUser"), unerfahrener Labor-Benutzer ("Inexperienced"), Manager. Durch solche Rollen wird eine sichere und effiziente Zugriffskontrolle ermöglicht. Die Benutzung eines mit der Zugriffssteuerung versehenen Laborgeräts ist sicher und effizient. Es wird auf einfache Weise verhindert, dass ein Benutzer z.B. wegen mangelnder Qualifikation bestimmte Operationen am Laborgerät durchführt, die gegebenenfalls zu Beschädigungen oder ineffizienter Nutzung des Laborgeräts bzw. zu Mehrkosten im Betrieb führen, z.B. durch überflüssigen Verbrauch an Verbrauchsmaterial, das für eine Behandlung verwendet wird.

Vorzugsweise sieht die Zugriffskontrolle mindestens eine Rolle oder mehr als eine Rolle vor, denen ein Benutzer gleichzeitig zugeordnet sein kann. Ein Individuum kann somit z.B. als Administrator oder als normaler Labor-Benutzer Zugriff erhalten, in Abhängigkeit von einer weiteren Bedingung. Vorzugsweise kann der Benutzer selber entscheiden, in welcher Rolle er am Laborgerät Zugriff erhält. Es ist aber auch möglich dass der Benutzer dies nicht selber entscheidet sondern dies die Zugriffssteuerung entscheidet. Diese Bedingung kann der verwendete Datensatz zur Authentifizierung sein, insbesondere das verwendete Passwort, oder kann von einem Parameter des Laborgeräts abhängen, insbesondere von einem Betriebsparameter des Laborgeräts, z.B. einem Betriebsparameter, der den Fehlerstatus des Laborgeräts kennzeichnet.

Die Steuereinrichtung der Zugriffssteuerung ist vorzugsweise dazu eingerichtet, dass mehr als ein Benutzer zeitgleich an der Zugriffssteuerung angemeldet sein kann, um Berechtigungen und/oder Zugriffsrechte zugewiesen zu bekommen. Eine solche Zugriffssteuerung zur gleichzeitigen Nutzung eines Laborgeräts stellt eine effiziente Lösung zur Steigerung der Produktivität in einem Labor dar.

Vorzugsweise ist die Zugriffssteuerung, insbesondere die Steuereinrichtung der Zugriffssteuerung, so eingerichtet, dass geprüft wird, ob wenigstens eine weitere vorbestimmte Bedingung beim Anmelden an der Benutzerschnittstelleneinrichtung erfüllt ist, und die Zugriffsrechte für den Zugriff auf das Laborgerät über die zweite Benutzerschnittstelleneinrichtung nur dann zugewiesen werden, wenn auch die wenigstens eine weitere vorbestimmte Bedingung erfüllt ist.

Vorzugsweise ist die Konfigurationssteuerung, insbesondere die Steuereinrichtung der Konfigurationssteuerung, so eingerichtet, dass geprüft wird, ob wenigstens eine weitere vorbestimmte Bedingung beim Anmelden an der Benutzerschnittstelleneinrichtung erfüllt ist, und eine benutzerabhängige Steuerung der Anzeige auf einer Benutzeroberfläche nur dann verwendet wird, wenn auch die wenigstens eine weitere vorbestimmte Bedingung erfüllt ist.

Diese weitere(n) vorbestimmte(n) Bedingung(en) kann (können) von der Rolle des Benutzers abhängen, vom Status des Laborgeräts, und/oder von dem Typ einer Benutzerschnittstelleneinrichtung, der bei Verbindung mit dem Laborgerät vom Laborgerät erkannt wurde.

Diese weitere(n) vorbestimmte(n) Bedingung(en) kann (können) insbesondere von der **Verwendungssituation** ("use case") abhängig sein. Ähnliche Bedingungen können von der Zugriffssteuerung generell berücksichtigt werden, wenn über die Vergabe von Berechtigungen und/oder Zugriffsrechten eines anmeldenden oder angemeldeten Benutzers entschieden wird.

Mögliche Verwendungssituationen sind z.B., jeweils vorzugsweise, die Beobachtung des Laborgeräts über eine Datenfernverbindung ("remote monitoring"), die Steuerung des Laborgeräts über eine Datenfernverbindung ("remote control"), die Einbeziehung eines Buchungszeitplans zur zeitabhängigen Planung der Benutzung des Laborgeräts durch mehrere Nutzer ("booking schedule"), die Vorprogrammierung einer Behandlung, insbesondere einer programmgesteuerten Behandlung, insbesondere durch eine Methodenprogrammierung ("preprogramming"), oder den Fernzugriff eines Servicetechnikers ("remote service access" bzw. "Remote Service Zugriff"). Die Bedingung kann ferner die Rolle des Benutzers berücksichtigen und/oder den Betriebszustand des Laborgeräts. Der Betriebszustand des Laborgeräts kann insbesondere ein Zustand des Leerlaufs sein, also ein Zustand insbesondere ohne laufende Behandlung, in dem aber das Laborgerät insbesondere bereit sein kann für die Anmeldung eines Benutzers und/oder die Durchführung einer Behandlung. Der Betriebszustand des Laborgeräts kann insbesondere ein Zustand sein, in dem eine Behandlung programmiert wird oder wurde und/oder die Behandlung vorbereitet wurde und unmittelbar vor der Ausführung steht. Der Betriebszustand des Laborgeräts kann insbesondere ein Zustand sein, in dem eine Behandlung bereits gestartet wurde und läuft, oder ein Zustand, in dem eine Behandlung gestoppt wurde, oder ein Zustand, in dem der Buchungszeitplan einen Reservierungseintrag für die Behandlung durch einen Benutzer aufweist, wobei unterschieden werden kann, ob dieser Benutzer entweder angemeldet ist oder nicht. Der Betriebszustand des Laborgeräts kann insbesondere ein Energiespar-Zustand ("standby" Modus) des Laborgeräts sein. Weitere Beispiele der möglichen bzw. bevorzugten Ausführung solcher Berechtigungen in Abhängigkeit von den genannten Bedingungen finden sich im "Anhang 1" der Beschreibung.

Vorzugsweise ist die Zugriffssteuerung, insbesondere die Steuereinrichtung der Zugriffssteuerung, so eingerichtet, dass, insbesondere wenn eine weitere Bedingung erfüllt ist, über die Schnittstelleneinrichtung Informationen über den Betriebszustand des Laborgeräts, Messwerte oder durch Benutzer beeinflussbare Einstellungen oder Programmierungen des Laborgeräts an die zweite Benutzerschnittstelleneinrichtung übermittelt werden. Diese Bedingung kann insbesondere sein, dass ein Benutzer bei der Zugriffssteuerung diese Informationsübermittlung beantragt hat. Vorzugsweise ist die Zugriffssteuerung, insbesondere die Steuereinrichtung der Zugriffssteuerung, so eingerichtet, dass, wenn diese Bedingung erfüllt ist, über die Schnittstelleneinrichtung Informationen über den Betriebszustand des Laborgeräts, Messwerte oder durch Benutzer beeinflussbare Einstellungen oder Programmierungen des Laborgeräts an die zweite Benutzerschnittstelleneinrichtung übermittelt werden.

Vorzugsweise ist die Zugriffssteuerung, insbesondere die Steuereinrichtung der Zugriffssteuerung, so eingerichtet, dass die durch Benutzer beeinflussbaren Einstellungen mindestens einen Programmparameter für die programmgesteuerte Behandlung einer Laborprobe beinhalten, die insbesondere über ein Methodenprogramm gesteuert wird.

Vorzugsweise weist die Steuereinrichtung der Zugriffssteuerung und/oder die Steuereinrichtung des Laborgeräts eine Speichereinrichtung auf, in der **Benutzerqualifikationsdaten** gespeichert sind, in denen für jeden Benutzer des Laborgerätes eine Qualifikation in Form mindestens eines Qualifikationswertes oder Zertifikats zugeordnet werden. Vorzugsweise ist die Zugriffssteuerung, insbesondere die Steuereinrichtung der Zugriffssteuerung, so eingerichtet, dass einem Benutzer in Abhängigkeit von dessen Qualifikation die Berechtigungen und/oder Zugriffsrechte erteilt werden, insbesondere eine Rolle zugewiesen wird. Dadurch können Benutzer das Laborgerät entsprechend ihrer Qualifikation verwenden und insbesondere werden unerfahrene Benutzer nicht überfordert. Dadurch wird die Produktivität und Betriebssicherheit bei der Verwendung des Laborgeräts gesteigert.

Vorzugsweise ist die Steuereinrichtung der Zugriffssteuerung und/oder die Steuereinrichtung des Laborgeräts dazu ausgebildet, ein **Qualifizierungsverfahren** für mindestens einen Benutzer durchzuführen, bei dem der mindestens eine Benutzer eine von der Steuereinrichtung durchgeführte und ausgewertete Qualifizierungsprüfung durchläuft, und wobei das Qualifizierungsverfahren insbesondere vorsieht, die vom mindestens einem Benutzer in Antwort auf bestimmte Fragen eingegebenen Daten auszuwerten und insbesondere vorsieht, dem mindestens einen Benutzer, insbesondere gemäß einer Vergleichstabelle oder Rechenvorschrift, in Abhängigkeit vom Ergebnis dieser Auswertung eine Qualifikation zuzuordnen. Ein derartiges, an der Zugriffssteuerung bzw. am Laborgerät durchgeführtes Qualifizierungsverfahren ist besonders praxisnah und deshalb effizient.

Vorzugsweise ist die Steuereinrichtung der Zugriffssteuerung und/oder die Steuereinrichtung des Laborgeräts dazu ausgebildet, dem Benutzer in Abhängigkeit von seiner Qualifikation mittels der Zugriffssteuerung bestimmte Zugriffsrechte auf Funktionen des Laborautomaten zu erteilen und/oder zu entziehen.

Vorzugsweise ist die Steuereinrichtung der Zugriffssteuerung und/oder die Steuereinrichtung des Laborgeräts dazu ausgebildet, dem Benutzer in Abhängigkeit von seiner Qualifikation mindestens eine, der Qualifikation entsprechende, grafische Benutzeroberfläche auf der Anzeige der Benutzerschnittstelleneinrichtung anzuzeigen und/oder insbesondere bestimmte Hilfsassistenzprogramme und/oder Hilfsinformationen zu Verfügung zu stellen oder nicht zur Verfügung zu stellen.

Vorzugsweise weist die Steuereinrichtung der Zugriffssteuerung und/oder die Steuereinrichtung des Laborgeräts einen Zeitgeber, insbesondere eine Uhr, und insbesondere eine **Reservierungseinrichtung** auf, die eine Speichereinrichtung aufweist, in der Reservierungsdaten gespeichert sind, die insbesondere mindestens einen Reservierungsdatensatz oder eine Vielzahl von Reservierungsdatensätzen enthalten, die zumindest einen Reservierungszeitplan ("booking schedule"), insbesondere für jede Behandlungseinrichtung einzeln, beschreiben.

Ein Reservierungsdatensatz enthält insbesondere mindestens eine der Informationen, insbesondere welcher Benutzer, insbesondere zu welchem Zeitpunkt, insbesondere welche Behandlung von Proben, insbesondere mittels welches Laborgerätes, durchführt, bzw. durchgeführt hat, bzw. durchführen wird. Die Reservierungsdaten enthalten vorzugsweise Informationen über die von der Reservierungseinrichtung akzeptierten Reservierungen, die nach einem Vergleich mit den im Reservierungszeitplan vorhandenen freien Kapazitäten tatsächlich bestätigt und in den Reservierungszeitplan aufgenommen wurden. Die Reservierungsdaten können aber auch Reservierungsanträge ("booking requests") enthalten, die die Reservierungseinrichtung insbesondere auch zu einem späteren Zeitpunkt nach der Antragstellung erneut prüfen kann und gegebenenfalls später akzeptieren kann, falls z.B. ein früherer Eintrag in der Reservierungszeitplan nachträglich storniert wurde. Der Reservierungsdatensatz enthält vorzugsweise auch die Information darüber, welche Art der Behandlung an einem Laborgerät jeweils geplant ist welcher konkrete Zeitraum, oder welche Dauer der Belegung des Laborgeräts dabei vorgesehen ist, und/oder Informationen über das zu verwendende Methodenprogramm, und enthält vorzugsweise insbesondere mindestens einen Programmparameter oder Steuerparameter.

Vorzugsweise ist die Zugriffssteuerung dazu ausgebildet, einem Benutzer auf Anfrage mindestens eine Information über den Reservierungszeitplan zu übersenden, insbesondere den Reservierungszeitplan teilweise oder vollständig zu übersenden oder mindestens eine Änderung des Reservierungszeitplans zu übersenden. Vorzugsweise ist die Zugriffssteuerung dazu ausgebildet, einem Benutzer automatisch eine Nachricht in Abhängigkeit von mindestens einer Bedingung zu übersenden. Diese Bedingung könnte die Änderung des Reservierungszeitplans eines Laborgeräts sein, insbesondere betreffend die Verfügbarkeit eines Termins zur Durchführung einer Behandlung, insbesondere das Freiwerden oder Stornieren eines Termins.

Die "Art der Behandlung" ist insbesondere durch die Programmparameter vorgegeben, die eine Behandlung kennzeichnen. Solche Programmparameter werden insbesondere von der Steuereinrichtung dazu verwendet, ein Methodenprogramm zu erzeugen. Ein Methodenprogramm ist insbesondere ein Steuerungscode zur Steuerung der Behandlung mittels Steuerparameter. Die Steuerparameter werden insbesondere von der Steuereinrichtung, insbesondere von einem in der Steuereinrichtung ablaufenden Steuerprogramm, z.B. einem Betriebssystem, unter Verwendung der Programmparameter erzeugt. Die Behandlung einer Probe wird insbesondere durchgeführt, indem von der Steuereinrichtung ein Methodenprogramm ausgeführt wird. Eine "Art der Behandlung" meint eine Methode, nämlich eine Anwendungsart (z.B. "MagSep Blood gDNA", "Compose Mastermix" etc.). Der Benutzer wählt bei einer bevorzugten Ausgestaltung des Laborgeräts als Laborautomat zunächst eine gewünschte Anwendung, also eine "Art der Behandlung", indem er insbesondere am Touchscreen eines Geräts eine Anwendung auswählt. Diese Anwendung, auch bezeichnet als "Methode", ist insbesondere einem Programmmodul zugeordnet, das insbesondere ein Bestandteil des Steuerprogramms sein kann. Insbesondere mittels des Programmoduls wird vom Benutzer mindestens ein Programmparameter abgefragt. Ein Programmmodul erzeugt insbesondere ein Methodenprogramm auf Basis des mindestens einen vom Benutzer gewählten Programmparameters.

Vorzugsweise ist die Steuereinrichtung der Zugriffssteuerung und/oder die Steuereinrichtung des Laborgeräts dazu ausgebildet, Reservierungsdaten in der Speichereinrichtung der Reservierungseinrichtung abzuspeichern.

Vorzugsweise ist die Steuereinrichtung der Zugriffssteuerung und/oder die Steuereinrichtung des Laborgeräts dazu ausgebildet, den von einem Benutzer in das Laborgerät, insbesondere mittels der Benutzerschnittstelleneinrichtung oder einer portablen bzw. mobilen Benutzerschnittstelleneinrichtung eingegebenen Reservierungsdatensatz aufzunehmen.

Vorzugsweise ist die Steuereinrichtung der Zugriffssteuerung und/oder die Steuereinrichtung des Laborgeräts dazu ausgebildet, den von einem Benutzer eingegebenen Reservierungsdatensatz mit bereits in der Speichereinrichtung der Benutzerschnittstelleneinrichtung gespeicherten Reservierungsdaten zu vergleichen.

Vorzugsweise ist die Steuereinrichtung der Zugriffssteuerung und/oder die Steuereinrichtung des Laborgeräts dazu ausgebildet, mindestens einen, einige oder alle von mindestens einem Benutzer eingegebenen Reservierungsdatensätze in der Speichereinrichtung zu speichern.

Vorzugsweise ist die Steuereinrichtung der Zugriffssteuerung und/oder die Steuereinrichtung des Laborgeräts dazu ausgebildet, einige oder alle von mindestens einem Benutzer eingegebenen und in der Speichereinrichtung gespeicherten Reservierungsdatensätze gemäß einem in der Steuereinrichtung abgelegten Auswerteverfahren auszuwerten, und nach mindestens einem Kriterium den Zeitplan zu erstellen, indem der/die Reservierungsdatensätze gemäß dem mindestens einen Kriterium eines in der Steuereinrichtung abgelegten Sortierverfahrens sortiert werden.

Vorzugsweise ist die Steuereinrichtung der Zugriffssteuerung und/oder die Steuereinrichtung des Laborgeräts dazu ausgebildet, mittels eines Auswerteverfahrens dem mindestens einen Reservierungsdatensatz eine Priorität zuzuordnen, die gemäß mindestens eines Kriteriums ermittelt wird.

Das Kriterium kann insbesondere durch eine in der Steuereinrichtung gespeicherten Datentabelle repräsentiert sein, in der z.B. die Priorität zu mindestens einem anderen Parameter in Bezug gesetzt wird, wobei dieser andere Parameter z.B. den Benutzer oder eine Benutzergruppe, oder die Klassifizierung einer Behandlung gemäß einer Relevanzliste (z.B. von wichtig bis unwichtig, kostspielig bis kostengünstig, etc.) charakterisieren kann.

Vorzugsweise ist die Steuereinrichtung der Zugriffssteuerung und/oder die Steuereinrichtung des Laborgeräts dazu ausgebildet, dass das Sortierverfahren mindestens zwei Reservierungsdatensätze gemäß mindestens eines Kriteriums sortiert, um insbesondere einen Zeitplan zu erstellen, der andere Zeitdaten verwendet, als dies in den Reservierungsdatensätzen der Benutzer vorgesehen ist.

Das Kriterium kann entsprechend der Definitionen beim Auswerteverfahren gewählt sein. Vorzugsweise ist die Steuereinrichtung zur Realisierung eines bevorzugten Kriteriums dazu ausgebildet, die Reservierungsdatensätze unter dem Aspekt zu sortieren, dass eine Ressource optimiert wird.

Diese Ressource kann z.B. die Zeit sein, insbesondere kann eine Minimierung der Wartezeiten angestrebt werden, die ein Benutzer jeweils als Differenz zwischen der von ihm gewünschten Startzeit und der vom Laborgerät nach Auswertung und Sortierung zugewiesenen Startzeit für sein Experiment, also die von ihm gewünschte Behandlung, erhält. Es kann auch die Minimierung der Passivitätszeit angestrebt werden, während der ein Laborgerät nicht genutzt wird. Insbesondere können auch zwischenzeitliche Wartungs-, Reinigungs- und/oder Sterilisierungsvorgänge mit eingeplant werden, während der z.B. mindestens ein Arbeitsbereich mindestens eines Laborgeräts bzw. Laborautomaten vorbereitet wird, insbesondere manuell und/oder automatisch vorbereitet, und/oder gereinigt und/oder sterilisiert wird.

Diese Ressource kann auch die Energie sein, die möglicherweise über verschieden und nacheinander ablaufende Behandlungen in Abhängigkeit von deren Reihenfolge unterschiedlich stark verbraucht wird.

Die Ressource kann ein Verbrauchsmaterial sein, insbesondere eine Substanz, z.B. ein Reinigungsmittel, oder bestimmte Transportbehälter, z.B. Pipettenspitzen, oder Lagerbehälter, z.B. Mikrotiterplatten, die über verschieden und nacheinander ablaufende Behandlungen in Abhängigkeit von deren Reihenfolge unterschiedlich stark verbraucht werden. Möglicherweise werden bei, von unterschiedlichen Benutzern geplanten Behandlungen die gleichen Methoden verwendet, so dass es effizient sein kann, die Reservierungen anhand der Methoden zu sortieren. Es ist z.B. denkbar, dass eine bestimmte Substanz und/oder ein bestimmtes Verbrauchsmaterial und/oder ein bestimmtes Werkzeug bei mehreren von unterschiedlichen (oder denselben) Benutzer(n) geplanten Methoden eingesetzt werden. Dann kann es insbesondere effizient sein, diese Substanz bzw. dieses Verbrauchsmaterial bzw. dieses Werkzeug im Laborgerät zu lagern, so dass einige Transportvorgänge überflüssig werden, wodurch Zeit gespart wird, und ggf. auch die Ressource selbst, die oftmals unter sterilen Bedingungen gehalten werden muss. Es wäre z.B. auch möglich, dass zwei im Reservierungszeitplan zeitlich nacheinander vorgesehene Behandlungen sich bestimmte Verbrauchsmaterialien teilen können. Beispielsweise könnte ein und derselbe Lagerbehälter in beiden Behandlungen verwendbar sein, so dass es effizient ist, den Lagerbehälter nach Beendigung der ersten Behandlung für die zweite Behandlung zu verwenden, anstatt zum Ende der ersten Behandlung den ersten Lagerbehälter zu entsorgen und zu Beginn der zweiten Behandlung einen weiteren Lagerbehälter einzusetzen. Dadurch kann in vielen Situationen Material und Zeit gespart werden.

Die Ressource kann auch die Mehrzahl von Laborgeräten sein, auf die die in einem Reservierungszeitraum anfallenden Reservierungen gemäß der mehreren Reservierungsdatensätze mehrerer Benutzer automatisch verteilt werden sollen, um eine optimale Ausnutzung des in einem Labor verfügbaren Parks von Laborgeräten zu erhalten. Insbesondere kann es Experimente geben, die den zeitlich abgestimmten Einsatz von mehr als einem Laborgerät erfordern. Die Ressource kann deshalb darin bestehen, eine Mehrzahl von Laborgeräten zeitlich optimal zu nutzen, insbesondere unter Berücksichtigung mindestens eines Experiments oder mehrerer Experimente, die jeweils unterschiedliche Laborgeräte benötigen können.

Beispielsweise ist es möglich, dass eine höherrangige Rolle, z.B. ein "Administrator", bereits im Reservierungszeitplan vorgesehene Reservierungseinträge löschen oder verschieben kann, beispielsweise weil ein (externer) Servicetechniker die Behandlungseinrichtung(en) an dem Termin warten muss/will oder aus anderen oben geschilderten Gründen. Insbesondere aus Kundensicht bevorzugt ist dabei nicht ein ungefragtes Agieren, sondern ein Hinweis an den/die Benutzer der vorbelegten einen oder mehreren Behandlungseinrichtungen, dass die Nutzung der Behandlungseinrichtung auf einen späteren Zeitpunkt verschoben werden muss. Dabei könnte auch das Vorschlagen eines geeigneten alternativen Zeitpunktes sinnvoll sein. Die Steuereinrichtung ist vorzugsweise dazu ausgebildet, einen solchen Hinweis über die Benutzerschnittstelleneinrichtung des betreffenden Benutzers auszugeben, insbesondere unter Verwendung einer Datenfernverbindung.

Sofern eine Behandlungseinrichtung sehr stark nachgefragt ist, eignet sich insbesondere ein Reservierungsmechanismus, der als eine FIFO-Liste (FIFO - first in first out) aufgebaut ist und die wiederum dafür genutzt wird, den an oberster Stelle stehenden Benutzer in dem Moment zu informieren, wenn die Behandlungseinrichtung nicht belegt ist, bzw. in einem ausgewählten Zeitraum in der Zukunft nicht belegt sein wird. Diese Information umfasst dann vorzugsweise auch den Zeitrahmen, den die Behandlungseinrichtung zur Verfügung steht. Der an oberster Stelle stehende Benutzer bekäme dann für einen definierten Zeitraum die Priorität, die Behandlungseinrichtung zu belegen. Tut er dies nicht, wird der Benutzer von der Liste gestrichen und die Belegungsoption geht an den nächsten Benutzer auf der Liste usw.

Der Begriff **"gerätegesteuerte Behandlung"** bedeutet, dass die Behandlung der mindestens einen Laborprobe zumindest teilweise vom Laborgerät gesteuert wird, insbesondere durchgeführt wird. Soweit die Behandlung vom Laborgerät gesteuert und/oder durchgeführt wird, wird diese insbesondere insofern nicht vom Benutzer gesteuert und/oder durchgeführt, insbesondere nicht manuell vom Benutzer gesteuert und/oder durchgeführt.

Unter einer gerätegesteuerten Behandlung wird ferner vorzugsweise verstanden, dass die Behandlung in Abhängigkeit von mindestens einer Benutzereingabe zumindest teilweise vom Laborgerät gesteuert wird, insbesondere durchgeführt wird. Die Benutzereingabe kann vor dem Start der Behandlung erfolgen und/oder während der Behandlung. Die Benutzereingabe erfolgt vorzugsweise über eine Benutzerschnittstelleneinrichtung, die vorzugsweise ein Bestandteil des Laborgeräts ist, oder die separat vom Laborgerät vorgesehen ist und mit der Steuereinrichtung des Laborgeräts und/oder der Steuereinrichtung der Zugriffssteuerung signalverbunden ist. Die Benutzereingabe dient insbesondere der Eingabe mindestens eines Parameters, dessen Wert die Behandlung beeinflusst und/oder steuert. Dieser Parameter kann insbesondere ein Programmparameter sein.

Die "gerätegesteuerte Behandlung" bezeichnet insbesondere die zumindest teilautomatisierte Behandlung. Bei einer teilautomatisierten Behandlung ist es insbesondere möglich, dass die Behandlung so durchgeführt wird, dass nach dem Starten der Behandlung und vor dem Beenden der Behandlung mindestens eine Benutzereingabe erfolgt, mit der der Benutzer die laufende Behandlung beeinflussen kann, insbesondere indem er z.B. eine über eine Benutzerschnittstelleneinrichtung des Laborgeräts erfolgende automatische Abfrage beantwortet, insbesondere diese durch eine Eingabe bestätigt oder verneint oder andere Eingaben vornimmt. Bei der teilautomatisierten Behandlung ist es insbesondere möglich, dass die Behandlung mehrere Behandlungsschritte aufweist, die insbesondere zeitlich nacheinander automatisch durchgeführt werden, und mindestens einen Behandlungsschritt aufweist, der eine, insbesondere über eine Benutzerschnittstelleneinrichtung erfolgende, Benutzereingabe erfordert.

Eine gerätegesteuerte Behandlung ist vorzugsweise eine **programmgesteuerte Behandlung,** also eine durch ein Programm gesteuerte Behandlung. Unter einer programmgesteuerten Behandlung einer Probe ist zu verstehen, dass der Vorgang der Behandlung im Wesentlichen durch Abarbeiten einer Mehrzahl oder Vielzahl von Programmschritten erfolgt. Vorzugsweise erfolgt die programmgesteuerte Behandlung unter Verwendung mindestens eines Programmparameters, insbesondere mindestens eines vom Benutzer gewählten Programmparameters. Ein von einem Benutzer gewählter Parameter wird auch als Nutzerparameter bezeichnet. Die programmgesteuerte Behandlung erfolgt vorzugsweise mithilfe einer digitalen Datenverarbeitungseinrichtung, die insbesondere Bestandteil der Steuereinrichtung des Laborgeräts sein kann. Die digitale Datenverarbeitungseinrichtung kann mindestens einen Prozessor, d.h. eine CPU aufweisen, und/oder mindestens einen Mikroprozessor aufweisen. Die programmgesteuerte Behandlung wird vorzugsweise entsprechend den Vorgaben eines Programms gesteuert und/oder durchgeführt, insbesondere eines Steuerprogramms. Insbesondere ist bei einer programmgesteuerten Behandlung zumindest nach Erfassung der benutzerseitig erforderlichen Programmparameter im Wesentlichen keine Benutzertätigkeit erforderlich.

Unter einem **Programmparameter** wird eine Variable verstanden, die innerhalb eines Programms oder Unterprogramms, für mindestens eine Durchführung (Aufruf) des Programms oder Unterprogramms gültig, in vorbestimmter Weise eingestellt werden kann. Der Programmparameter wird, z.B. vom Benutzer, festgelegt und steuert das Programm oder Unterprogramm und bewirkt eine Datenausgabe in Abhängigkeit von diesem Programmparameter. Insbesondere beeinflusst und/oder steuert der Programmparameter und/oder steuern die vom Programm ausgegebenen Daten die Steuerung des Geräts, insbesondere die Steuerung der Behandlung mittels der mindestens einen Behandlungseinrichtung.

Ein Programmparameter kann ein benutzerseitig erforderlicher Programmparameter sein. Ein benutzerseitig erforderlicher Programmparameter zeichnet sich dadurch aus, dass er für die Ausführung einer Behandlung, insbesondere zur Ausführung eines Methodenprogramms, erforderlich ist. Andere Programmparameter, die nicht benutzerseitig erforderlich sind, können aus den benutzerseitig erforderlichen Programmparametern abgeleitet werden oder anderweitig verfügbar gemacht werden, insbesondere wahlweise vom Benutzer eingestellt werden. Die Einstellung eines Programmparameters durch einen Benutzer erfolgt insbesondere durch Anzeige einer Auswahl von möglichen vorgegebenen Werten aus einer im Laborgerät gespeicherten Liste von vorgegebenen Werten, wobei der Benutzer aus dieser Liste den gewünschten Parameter auswählt und somit einstellt. Es ist auch möglich, dass dieser Programmparameter eingestellt wird, indem der Benutzer den Wert eingibt, indem er z.B. über einen Ziffernblock eine numerische Zahl eingibt, die dem gewünschten Wert entspricht oder indem der Benutzer einen Wert kontinuierlich oder in Inkrementen erhöht bzw. erniedrigt, bis dieser dem gewünschten Wert entspricht, und den Wert so einstellt. Andere Formen der Eingabe, z.B. durch Sprachsteuerung und/oder Gestensteuerung sind denkbar.

Unter einem **Programm** wird insbesondere ein Computerprogramm verstanden. Ein Programm ist eine Folge von Anweisungen, insbesondere bestehend aus Deklarationen und Instruktionen, um auf einer digitalen Datenverarbeitungsanlage eine bestimmte Funktionalität, Aufgaben- oder Problemstellung bearbeiten und/oder lösen zu können. Ein Programm liegt in der Regel als Software vor, die mit einer digitalen Datenverarbeitungsanlage verwendet wird. Das Programm kann insbesondere als Firmware vorliegen, im Fall der vorliegenden Erfindung insbesondere als Firmware der Steuereinrichtung des Laborgeräts und/oder der Zugriffssteuerung. Das Programm liegt meist auf einem Datenträger als ausführbare Programmdatei, häufig im sogenannten Maschinencode vor, die zur Ausführung in den Arbeitsspeicher des Rechners der digitalen Datenverarbeitungsanlage geladen wird. Das Programm wird als Abfolge von Maschinen-, d. h. Prozessorbefehlen von dem/den Prozessoren des Computers verarbeitet und damit ausgeführt. Unter 'Computerprogramm' wird insbesondere auch der Quelltext des Programms verstanden, aus dem im Verlauf der Steuerung des Laborgerätes der ausführbare Code entstehen kann.

Als **Anweisung** wird in üblicher Weise ein zentrales Element einer Programmiersprache bezeichnet. Die Programme derartiger Sprachen setzen sich primär aus einer oder mehreren Anweisungen zusammen. Eine Anweisung stellt eine in der Syntax einer Programmiersprache formulierte einzelne Vorschrift dar, die im Rahmen der Abarbeitung des Programms auszuführen ist. Wie eine Anweisung syntaktisch auszusehen hat, wird durch die jeweilige Programmiersprache bzw. deren Spezifikation festgelegt. In der maschinennahen Programmierung werden Anweisungen häufig auch als Befehl bezeichnet. Anweisungen sind üblicherweise Zuweisungen, Kontrollanweisungen (wie Sprünge, Schleifen und bedingte Anweisungen) und Prozeduraufrufe. Abhängig von der Programmiersprache sind teilweise auch Zusicherungen, Deklarationen, Klassen- und Funktionsdefinitionen, sowie Anweisungen. Die Anweisungen des Steuerprogramms können so in übliche Weise ausgestaltet sein.

Unter einem **Programmmodul** wird in üblicher Weise eine abgeschlossene funktionale Einheit einer Software verstanden, bestehend aus einer Folge von Verarbeitungsschritten und Datenstrukturen. Dabei können insbesondere folgende Definitionen zutreffen: Der Inhalt eines Moduls ist häufig eine wiederkehrende Berechnung oder Bearbeitung von Daten, die mehrfach durchgeführt werden muss. Module bieten eine Kapselung durch die Trennung von Schnittstelle und Implementierung: Die Schnittstelle eines Moduls definiert die Datenelemente, die als Eingabe und Ergebnis der Verarbeitung durch das Modul benötigt werden. Die Implementierung enthält den tatsächlichen Programmcode. Ein Modul wird zum Beispiel als Funktion oder Unterprogramm aufgerufen, führt eine Reihe von Verarbeitungsschritten durch und liefert als Ergebnis Daten zurück an das aufrufende Programm. Ein Modul kann selbst weitere Module aufrufen - so ist eine Hierarchie von Programmaufrufen möglich. Die in Modulen festgelegten Datenstrukturen und Methoden können gegebenenfalls vererbt und von anderen Modulen geerbt werden. Module sind daher ein wesentliches Element in der strukturierten und objektorientierten Programmierung.

Unter einem **Steuerprogramm** wird ein ausführbares Computerprogramm verstanden, das vorzugsweise die gewünschte Behandlung der mindestens einen Probe steuert und/oder durchführt, insbesondere in Abhängigkeit von mindestens einem Programmparameter. Dieser Programmparameter kann ein vom Benutzer beeinflusster und/oder eingestellter Programmparameter sein. Die Behandlung kann insbesondere gesteuert werden, indem die Steuereinrichtung in Abhängigkeit von den Programmparametern einen oder mehrere Steuerparameter erzeugt, mittels derer die mindestens eine Behandlungseinrichtung gesteuert wird. Vorzugsweise weist das Laborgerät ein Betriebssystem auf, das ein Steuerprogramm sein kann oder aufweisen kann. Das Steuerprogramm kann insbesondere ein Betriebssystem des Laborgeräts bezeichnen oder einen Bestandteil des Betriebssystems. Das Betriebssystem steuert die Behandlung und weitere Betriebsfunktionen des Laborgeräts.

Das Steuerprogramm kann insbesondere mit der Zugriffssteuerung signalverbunden sein, und/oder kann die Zugriffssteuerung steuern. Die Steuereinrichtung der Zugriffssteuerung kann in die Steuereinrichtung des Laborgeräts integriert sein, oder kann getrennt von dieser Steuereinrichtung ausgebildet sein. Die Zugriffssteuerung kann in die Steuereinrichtung des Laborgeräts integriert sein. Die Steuerung der Zugriffssteuerung kann in die Steuerung des Laborgeräts integriert sein, kann vom Steuerprogramm steuerbar sein und/oder kann insbesondere in das Steuerungsprogramm integriert sein. Das Steuerprogramm kann weitere vorzugsweise vorgesehene Funktionen des Laborgeräts steuern, zum Beispiel eine Energiesparfunktion des Laborgeräts oder eine Kommunikationsfunktion zur Kommunikation mit externen Datenverarbeitungseinrichtungen, die insbesondere separat zum Laborgerät vorgesehen sind und insbesondere nicht ein Bestandteil des Laborgeräts sind.

Unter einem **Methodenprogramm** wird ein Programm verstanden, das den konkreten Ablauf einer Behandlung bestimmt, insbesondere gemäß einer vorbestimmten Behandlungsart und/oder gemäß einer benutzerseitig festgelegten Weise.

Die Erfindung betrifft ferner ein **Laborgerät** zur gerätegesteuerten Behandlung mindestens einer Laborprobe, das mindestens eine Behandlungseinrichtung zur Durchführung der Behandlung der mindestens einen Laborprobe und eine erfindungsgemäße Zugriffssteuerung aufweist.

Vorzugsweise weist das Laborgerät eine Kommunikationseinrichtung zur Herstellung einer Datenfernverbindung für den Datenaustausch mit einem externen Gerät auf, das ebenfalls eine geeignete Kommunikationseinrichtung zur Herstellung einer Fernverbindung für den Datenaustausch mit dem Laborautomat aufweist. Eine solche Kommunikationseinrichtung kann zur Ausbildung einer Funkverbindung ausgebildet sein, insbesondere einer Mobilfunkverbindung. Vorzugsweise ist die Kommunikationseinrichtung dazu eingerichtet, den Fernzugriff eines Benutzers auf das Laborgerät, insbesondere die Auswahl oder Einstellung mindestens eines Parameters zu ermöglichen, insbesondere eines Parameters der eine Funktion des Laborgeräts zu steuern, insbesondere die Funktion der Ausführung einer Behandlung.

Vorzugsweise ist die Steuereinrichtung der Zugriffssteuerung oder des Laborgeräts dazu ausgebildet ist, Synchronisationsdaten bereitzustellen. Vorzugsweise ist die Zugriffssteuerung, insbesondere die Steuereinrichtung der Zugriffssteuerung, so eingerichtet, dass, wenn mindestens eine Bedingung erfüllt ist, über die Schnittstelleneinrichtung Informationen über den Betriebszustand des Laborgeräts, Messwerte oder durch Benutzer beeinflussbare Einstellungen oder Programmierungen des Laborgeräts an die zweite Benutzerschnittstelleneinrichtung übermittelt werden. Durch die Informationsübermittlung kann das Laborgerät, insbesondere eine dort laufende Behandlung, mittels der zweiten Benutzerschnittstelleneinrichtung weiter beobachtet und/oder gesteuert werden. Insbesondere kann der Verwendungszustand der ersten Benutzerschnittstelleneinrichtung teilweise oder vollständig in die zweite Benutzerschnittstelleneinrichtung kopiert, bzw. geklont werden. Die Informationsübermittlung kann insbesondere ein Synchronisierungsvorgang sein. Die erste und zweite Benutzerschnittstelle können insbesondere auf diese Weise synchronisiert werden. Die mindestens eine Bedingung kann sein, dass der Zugriff des zugreifenden Benutzers über eine Datenfernverbindung via einer (mobilen) Benutzerschnittstelleneinrichtung und der Antrag des Benutzers nach einer Synchronisierung erfolgt. Die mindestens eine Bedingung kann zudem die Bedingung a) oder b) sein, nämlich die Antwort auf die Prüfung, ob der anmeldende Benutzer vorausgehend bereits über eine erste Benutzerschnittstelleneinrichtung a) eine oder mehrere gerade ausgeführte Funktionen des Laborgeräts aktiviert hatte oder b) schon angemeldet ist. In den Fällen a) und b) würde die Synchronisierung nur einem Benutzer mit aktiver Sitzung und/oder gerade am Laborgerät aktivierten Funktionen, insbesondere laufenden Behandlungen die vom Benutzer initiiert wurden. Es ist aber auch möglich und bevorzugt, dass es einem weiteren Benutzer erlaubt werden kann, eine Synchronisierung durchzuführen, z.B. um eine Fernsteuerung zum Zwecke der Assistenz bei einer laufenden Sitzung oder Behandlung durchzuführen, oder Wartungsarbeiten etc.

Vorzugsweise ist die Steuereinrichtung der Zugriffseinrichtung dazu eingerichtet, diese Synchronisationsdaten an eine -insbesondere mobile- Benutzerschnittstelleneinrichtung zu übertragen. Vorzugsweise sind diese Synchronisationsdaten dazu geeignet sind, um die in der Anzeige der Benutzerschnittstelleneinrichtung angezeigten Informationen zumindest teilweise identisch auf der Anzeige der (mobilen) Benutzerschnittstelleneinrichtung anzuzeigen.

Der Begriff **Laborgerät** bezeichnet insbesondere ein Gerät, das zur gerätegesteuerten Behandlung mindestens einer Laborprobe ausgebildet ist und das zur Verwendung in einem Labor ausgebildet ist. Bei diesem Labor kann es sich insbesondere um ein chemisches, biologisches, biochemisches, medizinisches oder forensisches Laboratorium handeln. Solche Labors dienen der Forschung und/oder der Analyse von Laborproben, können aber auch zur Herstellung von Produkten mittels Laborproben oder der Herstellung von Laborproben dienen.

Ein Laborgerät ist vorzugsweise eines der folgenden Laborgeräte und/oder ist vorzugsweise als mindestens eines der folgenden Laborgeräte ausgebildet: Laborzentrifuge, im Rahmen der Beschreibung der vorliegenden Erfindung auch bezeichnet als "Zentrifuge" oder "centrifuge"; Thermocycler, im Rahmen der Beschreibung der vorliegenden Erfindung auch bezeichnet als "Cycler"; Labor-Spektralphotometer, im Rahmen der Beschreibung der vorliegenden Erfindung auch bezeichnet als "Biospektrometer"; Zellenzählgerät, im Rahmen der Beschreibung der vorliegenden Erfindung auch bezeichnet als "cellcounter", insbesondere optische Zählgeräte; Labor-Inkubator, im Rahmen der Beschreibung der vorliegenden Erfindung auch bezeichnet als "incubator"; Labor-Schüttelgerät, im Rahmen der Beschreibung der vorliegenden Erfindung auch bezeichnet als "shaker"; Labor-Mischer, auch bezeichnet als "mixing device"; Labor-Gefriergerät, im Rahmen der Beschreibung der vorliegenden Erfindung auch bezeichnet als "freezer"; Bioreaktor, im Rahmen der Beschreibung der vorliegenden Erfindung auch bezeichnet als Fermenter; Sicherheits-werkbank, insbesondere Biosicherheits-werkbank, im Rahmen der Beschreibung der vorliegenden Erfindung auch bezeichnet als "biosafety cabinet"; Probenplatten-Lesegerät, im Rahmen der Beschreibung der vorliegenden Erfindung auch bezeichnet als "plate reader", insbesondere "microplate reader"; Laborautomat zur Behandlung von fluiden Proben, insbesondere Pipettierautomat;.

Eine **Laborzentrifuge** ist ein Gerät, das unter Ausnutzung der Massenträgheit arbeitet. Die Laborzentrifuge, insbesondere die Behandlungseinrichtung der Laborzentrifuge, weist insbesondere mindestens einen Rotor auf, indem die mindestens eine Laborprobe anordenbar ist. Der mindestens eine Rotor ist rotierbar in mindestens einem Zentrifugenkessel angeordnet. Die Laborzentrifuge, insbesondere die Behandlungseinrichtung der Laborzentrifuge, weist mindestens eine Antriebseinrichtung auf, mittels der die Rotation angetrieben und/oder gebremst wird. Die Proben sind in dem mindestens einen Rotor anordenbar, vorzugsweise in Laborbehältern, z.B. Probenröhrchen, die in geeigneten Halterungen im Rotor angeordnet werden. Vorzugsweise weist die Laborzentrifuge, insbesondere die Behandlungseinrichtung der Laborzentrifuge, mindestens eine Heiz-/Kühleinrichtung auf, mit der die Temperatur der mindestens einen im Rotor angeordneten Probe gesteuert und/oder geregelt werden kann. Vorzugsweise weist die Laborzentrifuge, insbesondere die Behandlungseinrichtung der Laborzentrifuge, eine Zeitgebereinrichtung auf, mit der zeitliche Parameter der Rotation oder Temperatureinstellung steuerbar sind. Die Funktionsweise beruht auf der Zentrifugalkraft, die aufgrund einer gleichförmigen Kreisbewegung der zu zentrifugierenden Proben zustande kommt. Die Zentrifugalkraft wird zur Stofftrennung von Stoffen unterschiedlicher Dichte genutzt, die in einer Probe enthalten sind. Eine Zentrifuge kann ein Trennverfahren durchführen, bei dem insbesondere die Bestandteile von Suspensionen, Emulsionen und/oder Gasgemischen getrennt werden. Die gerätegesteuerte Behandlung der mindestens einen Laborprobe entspricht bei einer Laborzentrifuge einer Rotationsbehandlung, der die mindestens eine Probe unterzogen wird. Mögliche Parameter, insbesondere Programmparameter, insbesondere Nutzerparameter, die zur Beeinflussung einer Rotationsbehandlung verwendet werden, definieren insbesondere eine Temperatur der Laborzentrifuge, eine Rotationsgeschwindigkeit der Laborzentrifuge, einen zeitlichen Parameter der Rotation oder Temperatureinstellung, und/oder mindestens einen Ablaufparameter, der den Ablauf, insbesondere die Reihenfolge, eines aus mehreren Rotationsschritten bestehenden Rotationsprogramms beeinflusst oder definiert. Die Temperatur der Laborzentrifuge kann insbesondere mindestens eine Temperatur im Inneren des mindestens einen Rotors sein, insbesondere mindestens eine Temperatur mindestens einer Probe.

Ein Thermocycler ist ein Gerät, das in der Lage ist, die Temperatur mindestens einer Probe zeitlich nacheinander auf eine vorbestimmte Temperatur einzustellen und für eine vorgegebene Dauer auf dieser Temperaturstufe zu halten. Der Ablauf dieser Temperatursteuerung ist zyklisch. Das heißt ein vorbestimmter Temperaturzyklus, also eine Abfolge von mindestens zwei Temperaturstufen, wird wiederholt durchgeführt. Dieses Verfahren dient insbesondere der Durchführung einer Polymerase-Kettenreaktion (PCR). In diesem Zusammenhang bezeichnet man einen Thermocycler auch manchmal als PCR-Block. Ein Thermocycler, insbesondere die Behandlungseinrichtung des Thermocyclers, weist vorzugsweise einen Thermoblock auf. Ein Thermoblock ist ein Probenhalter aus einem wärmeleitenden Material, meistens ein metallhaltiges Material oder ein Metall, insbesondere Aluminium oder Silber. Der Probenhalter weist eine Kontaktierseite auf, die durch mindestens eine Heiz-/Kühleinrichtung des Thermocyclers, insbesondere ein Peltierelement, kontaktiert wird. Der Thermocycler, insbesondere die Behandlungseinrichtung des Thermocyclers, weist eine Regeleinrichtung mit mindestens einem Regelkreis auf, dem als Stellglied die mindestens eine Heiz-/Kühleinrichtung und als Messglied mindestens eine Temperaturmesseinrichtung zugeordnet sind. Mittels der Regeleinrichtung wird die Temperatur einer Temperaturstufe geregelt. Ein Kühlkörper des Thermocyclers, insbesondere der Behandlungseinrichtung des Thermocyclers, dient zur Kühlung von Abschnitten des Thermocyclers, insbesondere der Kühlung der Peltierelemente. Der Thermocycler, insbesondere die Behandlungseinrichtung des Thermocyclers, kann weitere Heiz- und/oder Kühlelemente aufweisen. Vorzugsweise weist der Thermocycler, insbesondere die Behandlungseinrichtung des Thermocyclers, eine Zeitgebereinrichtung auf, mit der zeitliche Parameter der Einstellung des Temperaturzyklus steuerbar sind. Die gerätegesteuerte Behandlung der mindestens einen Laborprobe entspricht bei einem Thermocycler einer Temperaturzyklusbehandlung, der die mindestens eine Probe unterzogen wird. Mögliche Parameter, insbesondere Programmparameter, insbesondere Nutzerparameter, die zur Beeinflussung einer Temperaturzyklusbehandlung verwendet werden, definieren insbesondere die Temperatur einer Temperaturstufe, die Dauer einer Temperaturstufe, die Steuerung weiterer Heiz- und/oder Kühlelemente, und/oder die Anzahl von Temperaturstufen oder Zyklen, und/oder mindestens einen Ablaufparameter, der den Ablauf, insbesondere die Reihenfolge, eines aus mehreren Schritten bestehenden Temperaturkontrollprogramms beeinflusst oder definiert.

Ein **Labor-Spektralphotometer** ist ein Gerät, das durch das Beleuchten mindestens eines Messvolumens mindestens einer Laborprobe meist über das gesamte Spektrum von infrarot bis ultraviolett des sichtbaren Lichtes die Remissionswerte ermittelt. Die Remission bezeichnet die Situation, dass ein Messvolumen einen Teil des Lichtspektrums absorbiert und einen Teil des Spektrums transmittiert (transparente Medien) bzw. reflektiert (undurchsichtige Medien). Mit dem Labor-Spektralphotometer wird insbesondere das Absorptionsvermögen einer Probe in Abhängigkeit von der Lichtwellenlänge gemessen. Darüber hinaus besteht insbesondere die Möglichkeit, den Anwendungsbereich des Labor-Spektralphotometers durch verschiedene Module zu erweitern. So ist z.B. die Anordnung eines Fluoreszenz-Moduls zur Messung von Fluoreszenz oder eines Temperiermoduls zur Temperierung der Probe im Spektrometer denkbar. Das gemessene Absorptionsspektrum enthält insbesondere die bei bestimmten Wellenlängen gemessenen Lichtintensitäten. Das Absorptionsspektrum ist charakteristisch für die Laborprobe bzw. den darin enthaltenen Stoff oder die Stoffe. Dies kann zur qualitativen Analyse der Laborprobe genutzt werden. Ist die flüssige Probe bzw. der darin gelöste Stoff bekannt, kann durch Messung der Absorption die Konzentration des gelösten Stoffes ermittelt werden. Dies kann zur quantitativen Analyse der Laborprobe genutzt werden. Das Labor-Spektralphotometer, insbesondere die Behandlungseinrichtung des Labor-Spektralphotometers, weist vorzugsweise mindestens eine Lichtquelle auf, vorzugsweise mindestens einen Zeitgeber, vorzugsweise mindestens einen Photodetektor. Die gerätegesteuerte Behandlung der mindestens einen Laborprobe entspricht bei einem Labor-Spektralphotometer einer Licht- und Messbehandlung, der die mindestens eine Probe unterzogen wird. Mögliche Parameter, insbesondere Programmparameter, insbesondere Nutzerparameter, die zur Beeinflussung einer Licht- und Messbehandlung verwendet werden, definieren insbesondere das optische Lichtspektrum, mit dem die mindestens eine Probe bestrahlt wird und/oder mindestens einen Ablaufparameter, der den Ablauf, insbesondere die Reihenfolge, eines aus mehreren Schritten bestehenden Licht- und Messbehandlungsprogramms beeinflusst oder definiert.

Ein **Zellenzählgerät** dient dem Zählen von biologischen Zellen, bzw. Partikeln, die in einer Laborprobe enthalten sind. Es gibt verschiedene physikalische Prinzipien, die zum Zählen von Zellen in Frage kommen, insbesondere optische Verfahren, bei denen die zu messende Laborprobe in einer Zählkammer angeordnet wird, insbesondere bei automatisch arbeitenden zusätzlich beleuchtet wird und ein Bild der in der Zählkammer angeordneten Zellen bzw. Partikel erfasst wird und ausgewertet wird. Ein weiteres etabliertes Verfahren ist die Impedanzmessung: ein als Coulter Counter ausgeführtes Zellenzählgerät leitet die die Zellen enthaltende Laborprobe durch eine Apertur ("Messschleuse"). Jeder Durchtritt einer Zelle durch die Apertur wird als zählbares Ereignis elektrisch detektiert. Optische Zellenzählgeräte, insbesondere die Behandlungseinrichtung des Zellenzählgeräts, weisen je nach Ausführung vorzugsweise mindestens eine Lichtquelle auf, mindestens eine Bilderfassungseinrichtung und mindestens eine Bildauswerteeinrichtung*, zusätzlich u.U. eine Positioniereinrichtung. Die gerätegesteuerte Behandlung der mindestens einen Laborprobe entspricht bei einem optischen Zellenzählgerät z.B. einer Licht- und Messbehandlung, bei einem nach dem Coulter Prinzip arbeitenden Gerät einer Pump- und Messbehandlung, der die mindestens eine Probe unterzogen wird. Mögliche Parameter, insbesondere Programmparameter, insbesondere Nutzerparameter, die zur Beeinflussung einer Licht- und Messbehandlung oder der Pump- und Messbehandlung verwendet werden, definieren insbesondere die Lichtintensität der Lichtquelle, mit dem die mindestens eine Probe bestrahlt wird und/oder mindestens einen Ablaufparameter, der den Ablauf, insbesondere die Reihenfolge, eines aus mehreren Schritten bestehenden Licht- und Messbehandlungsprogramms oder Pump- und Messbehandlungsprogramms beeinflusst oder definiert. Bei optischen Zählgeräten sind außerdem die für die Bildauswertung notwendigen Algorithmen, deren Reihenfolge und Parametrierung entscheidend für die Aussagekraft des Messergebnisses, sind???. Optische Messgeräte, aber auch Coulter Counter, nutzen oft Zählkammern zum einmaligen Gebrauch ("Consumables)", dies sind den herkömmlichen Neubauerzählkammern nachempfundene Kunststoffartikel, bzw., bei den Coulter Countern, "Lab-on-a-Chip"- ähnliche Einmalzählkammern. Es gibt aber auch Geräte, die ohne diese Verbrauchsmaterialien arbeiten (z.B. "CASY").

Ein **Labor-Inkubator** ist ein Gerät, mit dem kontrollierte Klimabedingungen für verschiedene biologische Entwicklungs- und Wachstumsprozesse geschaffen und erhalten werden können. Er dient der Schaffung und Erhaltung eines Mikroklimas mit geregelten Gas-, und/oder Luftfeuchtigkeits- und/oder Temperatur-Bedingungen in einem Inkubatorraum, wobei diese Behandlung zeitabhängig sein kann. Der Labor-Inkubator, insbesondere die Behandlungseinrichtung des Labor-Inkubators, weist insbesondere einen Zeitgeber auf, insbesondere eine Zeitschaltuhr, eine Heiz-/Kühleinrichtung und vorzugsweise eine Einstellung für die Regelung eines dem Inkubatorraum zugeführten Austauschgases, insbesondere Frischluft, eine Einstelleinrichtung für die Zusammensetzung des Gases im Inkubatorraum des Labor-Inkubators, insbesondere zur Einstellung des CO₂ und/oder des O₂ Gehalts des Gases und/oder eine Einstelleinrichtung zur Einstellung der Luftfeuchtigkeit im Inkubatorraum des Labor-Inkubators. Der Labor-Inkubator, insbesondere die Behandlungseinrichtung des Labor-Inkubators, weist insbesondere den Inkubatorraum auf, ferner vorzugsweise eine Regeleinrichtung mit mindestens einem Regelkreis, dem als Stellglied die mindestens eine Heiz-/Kühleinrichtung und als Messglied mindestens eine Temperaturmesseinrichtung zugeordnet sind. Mittels der Regeleinrichtung kann die Temperatur im Inkubator geregelt werden. CO₂-Inkubatoren dienen insbesondere der Kultivierung tierischer bzw. humaner Zellen. Inkubatoren können Wendevorrichtungen zum Wenden der mindestens einen Laborprobe und/oder eine Schütteleinrichtung zum Schütteln bzw. Bewegen der mindestens einen Laborprobe aufweisen. Die gerätegesteuerte Behandlung der mindestens einen Laborprobe entspricht bei einem Labor-Inkubator einer Klimabehandlung, der die mindestens eine Probe unterzogen wird. Mögliche Parameter, insbesondere Programmparameter, insbesondere Nutzerparameter, die zur Beeinflussung einer Klimabehandlung verwendet werden, definieren insbesondere die Temperatur des Inkubatorraums, in dem die mindestens eine Probe inkubiert wird, den O₂- und/oder CO₂-Partialdruck im Inkubationsinnenraum, die Luftfeuchtigkeit im Inkubationsinnenraum und/oder mindestens einen Ablaufparameter, der den Ablauf, insbesondere die Reihenfolge, eines aus mehreren Schritten bestehenden Inkubationsbehandlungsprogramms beeinflusst oder definiert.

Ein **Labor-Schüttelgerät** dient der Bewegung einer Laborprobe, insbesondere zum Mischen einer mehrere Bestandteile aufweisenden Laborprobe. Labor-Schüttelgeräte gibt es in verschiedenen Ausführungen, insbesondere als Überkopf-Schüttelgeräte oder als Flachbett-Schüttelgeräte. Labor-Schüttelgeräte können eine Temperierfunktion zum Temperieren der mindestens einen Laborprobe aufweisen, und können insbesondere eine Inkubatorfunktion zum Inkubieren der mindestens einen Laborprobe bei kontrollierten Klimabedingungen aufweisen. Labor-Schüttelgeräte, insbesondere deren Behandlungseinrichtung, können insbesondere zur Durchführung einer oszillierenden Bewegung eingerichtet sein. Labor-Schüttelgeräte, insbesondere deren Behandlungseinrichtung, weisen insbesondere einen Antrieb zum Antreiben der Bewegung auf, weisen insbesondere eine Zeitgebereinrichtung auf, mit der zeitliche Parameter der Einstellung der Schüttelbehandlung steuerbar sind und weisen insbesondere mindestens eine Heiz-/Kühleinrichtung und mindestens eine Regeleinrichtung mit mindestens einem Regelkreis, dem als Stellglied die mindestens eine Heiz-/Kühleinrichtung und als Messglied mindestens eine Temperaturmesseinrichtung zugeordnet sind. Die gerätegesteuerte Behandlung der mindestens einen Laborprobe entspricht bei einem Labor-Schüttelgerät einer Schüttelbehandlung, der die mindestens eine Probe unterzogen wird. Mögliche Parameter, insbesondere Programmparameter, insbesondere Nutzerparameter, die zur Beeinflussung einer Schüttelbehandlung verwendet werden, definieren insbesondere die Bewegungsintensität, insbesondere die Bewegungsfrequenz bei einem oszillierenden Antrieb, einer Zeitperiode bei der Schüttelbehandlung, und/oder mindestens einen Ablaufparameter, der den Ablauf, insbesondere die Reihenfolge, eines aus mehreren Schritten bestehenden Schüttelbehandlungsprogramms beeinflusst oder definiert.

Ein **Labor-Mischer,** auch bezeichnet als "mixing device", dient wie das Labor-Schüttelgerät der Bewegung einer Laborprobe, insbesondere zum Mischen einer mehrere Bestandteile aufweisenden Laborprobe. Im Vergleich zu einem Labor-Schüttelgerät ermöglicht ein Labor-Mischer Bewegungen mit höheren Frequenzen, insbesondere höheren Drehzahlen. Labor-Mischer, insbesondere deren Behandlungseinrichtung, können insbesondere zur Durchführung einer oszillierenden Bewegung eingerichtet sein. Labor-Mischer, insbesondere deren Behandlungseinrichtung, weisen insbesondere einen Antrieb zum Antreiben der Bewegung auf, weisen insbesondere eine Zeitgebereinrichtung auf, mit der zeitliche Parameter der Einstellung der Mischbehandlung steuerbar sind und weisen insbesondere mindestens eine Heiz-/Kühleinrichtung und mindestens eine Regeleinrichtung mit mindestens einem Regelkreis, dem als Stellglied die mindestens eine Heiz-/Kühleinrichtung und als Messglied mindestens eine Temperaturmesseinrichtung zugeordnet sind. Die gerätegesteuerte Behandlung der mindestens einen Laborprobe entspricht bei einem Labor-Mischer einer Mischbehandlung, der die mindestens eine Probe unterzogen wird. Mögliche Parameter, insbesondere Programmparameter, insbesondere Nutzerparameter, die zur Beeinflussung einer Mischbehandlung verwendet werden, definieren insbesondere die Bewegungsintensität, insbesondere die Bewegungsfrequenz bei einem oszillierenden Antrieb, einer Zeitperiode bei der Mischbehandlung, und/oder mindestens einen Ablaufparameter, der den Ablauf, insbesondere die Reihenfolge, eines aus mehreren Schritten bestehenden Mischbehandlungsprogramms beeinflusst oder definiert.

Ein **Labor-Gefriergerät** dient der Lagerung mindestens einer Laborprobe in einem Gefrierraum bei geregelten Temperaturen insbesondere im Tiefkühlbereich von -18° C bis -50 °C oder im Ultratiefkühlbereich von -50° C bis - 90° C. Ein Labor-Gefriergerät ist insbesondere kein Kühlschrank, der zum Kühlen bei Temperaturen insbesondere im Bereich von 0° C bis 10° C oder von - 10° C bis 10 °C verwendbar ist. Ein Labor-Gefriergerät, insbesondere die Behandlungseinrichtung des Labor-Gefriergeräts, weist insbesondere mindestens eine Kühleinrichtung und mindestens eine Regeleinrichtung mit mindestens einem Regelkreis auf, dem als Stellglied die mindestens eine Kühleinrichtung und als Messglied mindestens eine Temperaturmesseinrichtung zugeordnet sind. Ein Labor-Gefriergerät, insbesondere die Behandlungseinrichtung des Labor-Gefriergeräts, weist insbesondere ein Kontrollmessgerät zur Temperaturmessung und/oder insbesondere eine Alarmeinrichtung auf, mit der ein Alarmsignal ausgegeben wird, wenn die im Gefrierraum gemessene Temperatur einen erlaubten Temperaturbereich verlässt. Ein Labor-Gefriergerät, insbesondere die Behandlungseinrichtung des Labor-Gefriergeräts, kann insbesondere eine Informationsleseeinrichtung zum Lesen der Information aufweisen. Diese Information kann auf einem Informationsträger enthalten sein, der mit einem Artikel verbunden sein kann. Dieser Artikel kann insbesondere ein Probenbehälter sein, der mindestens eine Laborprobe enthalten kann. Der Informationsträger kann insbesondere einen RFID-Chip oder andere Identifikationsmerkmale aufweisen, wie z.B. einen Barcode, einen Datamatrix Code, einen QR-Code, die mit geeigneten Verfahren lesbar sind. Die gerätegesteuerte Behandlung der mindestens einen Laborprobe entspricht bei einem Labor-Gefriergerät einer Tieftemperaturbehandlung, der die mindestens eine Probe unterzogen wird. Mögliche Parameter, insbesondere Programmparameter, insbesondere Nutzerparameter, die zur Beeinflussung einer Tieftemperaturbehandlung verwendet werden, definieren insbesondere die Temperatur des Gefrierraumsraums, in dem die mindestens eine Probe tiefgekühlt wird und/oder den Informationslesevorgang, der vorzugsweise durchgeführt wird, wenn ein mit einem Informationsträger versehener Artikel von einem Benutzer in das Labor-Gefriergerät überführt wird.

Ein **Bioreaktor** weist einen Behälter auf, in dem bestimmte Mikroorganismen, Zellen Algen oder Pflanzen, z.B. Moose, unter möglichst optimalen Bedingungen kultiviert (auch: fermentiert) werden. Der Betrieb eines Bioreaktors ist somit eine Anwendung der Biotechnologie, die biologische Prozesse, insbesondere Biokonversion oder Biokatalyse, in technischen Einrichtungen nutzt bzw. nutzbar macht. Faktoren, die in den meisten Bioreaktoren insbesondere durch Einstellung entsprechender Parameter steuerbar oder kontrollierbar sind, sind die Zusammensetzung des Nährmediums, die Sauerstoffzufuhr, Temperatur, pH-Wert, Sterilität und/oder andere Faktoren. Zweck der Kultivierung in einem Bioreaktor kann die Gewinnung der Zellen oder von Bestandteilen der Zellen oder die Gewinnung von Stoffwechselprodukten sein. Diese können z. B. als Wirkstoff in der pharmazeutischen oder als Grundchemikalie in der chemischen Industrie verwendet werden. Auch der Abbau von chemischen Verbindungen kann in Bioreaktoren stattfinden, wie z. B. bei der Abwasserreinigung in Kläranlagen. Die Herstellung von Bier, Wein und anderen derartigen Produkten findet ebenfalls in Bioreaktoren statt. In Bioreaktoren werden unterschiedlichste Organismen für verschiedene Zwecke kultiviert. Ein Bioreaktor kann deshalb unterschiedlich ausgeführt sein. Er kann als Rührkesselreaktor ausgeführt sein, der ein Volumen von wenigen Millilitern bis hunderten Litern haben kann und mit Nährlösung gefüllt werden kann. Er kann auch als Festbettreaktor, Photobioreaktor verwendet werden bzw. ausgebildet sein. Ein Bioreaktor kann Teil eines Bioreaktor-Systems sein, vorzugsweise eines parallelen Bioreaktor-Systems. In einem solchen parallelen Bioreaktor-System wird eine Vielzahl von Bioreaktoren parallel betrieben und mit höherer Präzision kontrolliert. Ein Bioreaktor, insbesondere dessen Behandlungseinrichtung, weist insbesondere eine Rühreinrichtung auf zum Rühren der im Reaktorbehälter enthaltenen Probe, insbesondere des Nährmediums. Ein Bioreaktor, insbesondere dessen Behandlungseinrichtung, weist insbesondere eine Pumpeinrichtung zum Pumpen der vorzugsweise als Nährmedium ausgeführten Laborprobe auf. Ein Bioreaktor, insbesondere dessen Behandlungseinrichtung, weist insbesondere eine Einstelleinrichtung für die Einstellung eines Gasgehalts im Reaktorbehälter, insbesondere des Gehalts an CO₂ und/oder O₂ bzw. an Gelöstsauerstoff (DO) auf. Ein Bioreaktor, insbesondere dessen Behandlungseinrichtung, weist insbesondere eine Einstelleinrichtung für die Einstellung, insbesondere Regelung, eines pH-Werts in der Probe im Reaktorbehälter auf. Die gerätegesteuerte Behandlung der mindestens einen Laborprobe entspricht bei einem Bioreaktor insbesondere einer Nährmediumsbehandlung, der die mindestens eine vorzugsweise als Nährmedium ausgeführte Probe unterzogen wird. Mögliche Parameter, insbesondere Programmparameter, insbesondere Nutzerparameter, die zur Beeinflussung einer Nährmediumsbehandlung verwendet werden, definieren insbesondere die Temperatur des Nährmediums im Reaktorbehälter, und/oder die Geschwindigkeit der Rühreinrichtung, insbesondere Rotationsgeschwindigkeit, und/oder die Pumpgeschwindigkeit bzw. Dosiergeschwindigkeit, und/oder einen Gasgehalt im Nährmedium, insbesondere CO₂ und/oder O₂ bzw. Gelöstsauerstoff (DO), und/oder den pH-Wert des Nährmediums, und/oder mindestens einen Ablaufparameter, der den Ablauf, insbesondere die Reihenfolge, eines aus mehreren Schritten bestehenden Nährmediumsbehandlungsprogramms beeinflusst oder definiert.

Eine **Sicherheitswerkbank** dient insbesondere zur sicheren Lagerung oder Aufbewahrung von Gefahrenstoffen, insbesondere zur Erfüllung einer biologischen Schutzstufe. Diese Stufen sind insbesondere in der EU-Richtlinie 2000/54/EG über den Schutz der Arbeitnehmer gegen Gefährdung durch biologische Arbeitsstoffe bei der Arbeit normiert sowie in der Biostoffverordnung in Deutschland. Eine Sicherheitswerkbank soll verhindern, dass im Falle der Gefahrenentstehung bei in einem Sicherheitsschrank gelagerten Laborproben die Umwelt gefährdet wird. Die Sicherheit wird insbesondere dadurch gewährleistet, dass die im Aufnahmebereich der Sicherheitswerkbank enthaltene Atmosphäre ausgetauscht und insbesondere gefiltert wird. Dabei wird insbesondere diese Atmosphäre von einer Fördereinrichtung durch den Aufnahmebereich gefördert und durch einen Filter bewegt, der die Atmosphäre filtert, insbesondere von Gefahrstoffen reinigt. Die Sicherheitswerkbank, insbesondere deren Behandlungseinrichtung, weist insbesondere eine Fördereinrichtung zum Befördern von Atmosphärengas auf, weist insbesondere eine Zeitgebereinrichtung zur Messung einer Filterbetriebsdauer und einer Lüfterbetriebsdauer auf und/oder weist insbesondere eine Messeinrichtung zur Messung einer geförderten Menge an Atmosphärengas auf. Die gerätegesteuerte Behandlung der mindestens einen Laborprobe entspricht bei einer Sicherheitswerkbank insbesondere einer Atmosphärengasbehandlung zur Behandlung des Atmosphärengases, in dem die mindestens eine Probe gelagert ist. Mögliche Parameter, insbesondere Programmparameter, insbesondere Nutzerparameter, die zur Beeinflussung einer Atmosphärengasbehandlung verwendet werden, definieren insbesondere die Temperatur des Atmosphärengases im Aufnahmebereich, und/oder die Strömungsgeschwindigkeit des von der Fördereinrichtung beförderten Atmosphärengases, die geförderte Luftmenge, die Filterbetriebsdauer, und/oder die Lüfterbetriebsdauer.

Ein **Probenplatten-Lesegerät,** auch bezeichnet als "plate reader" oder "microplate reader", ist ein Laborgerät zum Nachweis biologischer, chemischer oder physikalischer Ereignisse von Proben in Mikrotiterplatten. Sie sind weit verbreitet in der Forschung verwendet, Wirkstoffforschung, Bioassay Validierung, Qualitätskontrolle und Fertigungsprozesse in der pharmazeutischen und biotechnologischen Industrie und akademischen Organisationen. Das Probenplatten-Lesegerät kann insbesondere mindestens eine Lichtquelle oder Strahlungsquelle aufweisen, kann mindestens einen Photodetektor aufweisen, kann eine Temperaturkontrolleinrichtung zu Temperierung der Proben bzw. der Probenplatten aufweisen, kann einen Zeitgeber aufweisen. Probenreaktionen können in 6-1536 Well-Format Mikrotiterplatten getestet werden. Die häufigste Format für Probenplatten, insbesondere Mikrotiterplatten, das in akademischen Forschungslabors oder klinisch-diagnostische Laboratorien verwendet wird, ist eine 96-well plate (eine 8 mal 12 Matrix) mit einem typischen Einzelvolumen zwischen 100 und 200 µl pro Well. Mikrotiterplatten mit höherer Dichte (384 - oder 1536-Well-Mikroplatten) werden typischerweise für Screening-Anwendungen verwendet, wenn Durchsatz (Anzahl der pro Tag verarbeiteten Proben) und Assay-Kosten pro Probe zu kritischen Parametern werden, mit einem typischen Assay-Volumen zwischen 5 und 50 µl pro Well. Die Behandlung ist insbesondere eine optische Messung der Mikrotiterplatte, insbesondere die Messung einer Absorption, Fluoreszenz-Intensität, Lumineszenz, zeitaufgelöste Fluoreszenz, und/oder Fluoreszenzpolarisation. Mögliche Parameter, insbesondere Programmparameter, insbesondere Nutzerparameter, die zur Beeinflussung einer Messung verwendet werden, definieren z.B. die Intensität der Lichtquelle, die Sensitivität eines Photodetektors, eine Zeitdauer und/oder eine Temperatur.

Ein **Laborautomat zur Behandlung von fluiden Proben,** insbesondere Pipettierautomat, dient der programmgesteuerten Behandlung dieser Proben. Ein Laborautomat kann ein Laborgerät sein oder mindestens ein Laborgerät der vorgenannten Art aufweisen, und/oder kann zur Durchführung mindestens einer, mehrerer oder aller der von diesem vorgenannten Laborgerät ausführbaren Behandlungen ausgebildet sein. Ein Laborautomat weist die Behandlungseinrichtung zur automatischen, programmgesteuerten Behandlung der mindestens einen Laborprobe auf, wobei die Behandlung unter Verwendung von mehreren Programmparametern, die zumindest teilweise vom Benutzer gewählt werden, gesteuert wird. Dabei kann die Probe vom Laborautomaten, bzw. einer Behandlungseinrichtung des Laborautomaten, beispielsweise bewegt und/oder transportiert werden. Die Bewegung kann durch Transport in beweglichen Probenbehältern oder durch die Leitung in Schlauchsystemen, Kapillaren oder Pipettenspitzen erfolgen. Dabei werden flüssige Proben insbesondere durch Ansaugen, also Pipettieren, oder allgemeiner, durch Anlegen von Druckdifferenzen transportiert. Durch eine Behandlung der Probe kann eine Probe z.B. geteilt oder verdünnt werden. Die Inhaltsstoffe einer Probe können analysiert werden oder es können, z.B. durch eine chemische Reaktion, neue Inhaltsstoffe hergestellt werden, insbesondere unter Verwendung der Probe. Insbesondere im Zusammenhang mit der Bearbeitung und Analyse von DNA oder RNA oder deren Bestandteilen sind Laborautomaten hilfreich, um eine Fülle von Informationen innerhalb einer geeigneten Zeitspanne zu gewinnen oder viele solcher Proben zu analysieren. Diese Behandlungseinrichtung eines Laborautomaten weist meist eine Arbeitsfläche mit Arbeitsstationen auf, an denen Proben in verschiedener Weise bearbeitet oder gelagert werden können. Für den Transport von z.B. flüssigen Proben zwischen verschiedenen Positionen, insbesondere Probenbehältern, weist die Behandlungseinrichtung meist eine gerätegesteuerte Bewegungsvorrichtung und eine gerätegesteuerte Fluid-TransferEinrichtung auf, die z.B. ein Pipettiersystem aufweisen kann, auf. Sowohl der Transport der Proben als auch deren Behandlung an den verschiedenen Stationen lässt sich gerätegesteuert durchführen, insbesondere programmgesteuert durchführen. Die Behandlung erfolgt dann vorzugsweise zumindest teilweise oder vollständig automatisiert.

Vorzugsweise kann der Benutzer des Laborautomaten die Art der Behandlung der Probe festlegen. Eine solche Behandlungsart kann insbesondere dienen:
der Nukleinsäureaufreinigung, insbesondere
   - "MagSep Blood gDNA": Aufreinigung von genomischer DNA aus Vollblut, insbesondere unter Verwendung des Eppendorf ® MagSep Blood gDNA Kits;
   - "MagSep Tissue gDNA": Aufreinigung von genomischer DNA aus lebendem Gewebe, insbesondere unter Verwendung des Eppendorf ® MagSep Tissue gDNA Kits;
   - "MagSep Viral DANN/RNA": Aufreinigung von viraler RNA oder DNA aus zellfreien Körperflüssigkeiten, insbesondere unter Verwendung des Eppendorf ® MagSep Viral DNA/RNA Kits;
und PCR-Anwendungen, insbesondere
   - "Compose Mastermix";
   - "Normalize Concentrations";
   - "Create Dilution Series";
   - "Setup Reactions".

Ein Laborgerät, insbesondere der Laborautomat, ist vorzugsweise so ausgebildet, dass die Steuerung der Behandlung der mindestens einen Laborprobe automatisch unter Verwendung der erfassten Programmparameter erfolgen kann. Das Laborgerät, insbesondere der Laborautomat, insbesondere dessen Steuerungsprogramm ist vorzugsweise so ausgebildet, dass die vom Benutzer vorgenommenen Eingaben, insbesondere der mindestens eine Wert mindestens eines Programmparameters, dazu verwendet werden, um gegebenenfalls weitere erforderliche Programmparameter automatisch zu ermitteln, insbesondere durch Berechnung oder durch Vergleich mit Daten in einer Datenbank des Laborautomaten. Insbesondere werden vorzugsweise die zur Durchführung der Behandlung im Einzelnen vorzugsweise zu verwendenden Steuerparameter automatisch bestimmt. Durch diese Maßnahmen wird die Bedienung des Laborautomaten komfortabel, der Benutzer erspart sich insbesondere das Entwerfen eines Programmcodes, da diese Schritte insbesondere automatisch vom Laborgerät, insbesondere Laborautomat, durchgeführt werden. In einer bevorzugten Ausgestaltung werden vom Benutzer nur die Eingaben abgefordert, die direkt mit der durchzuführenden Behandlung der Proben zu tun haben. Das sind häufig dieselben Angaben, die auch für eine manuelle Durchführung der Behandlung notwendig wären und dem Benutzer geläufig sind. Dagegen müssen solche Parameter, die die Steuerung des Laborgerätes, insbesondere des Laborautomaten, betreffen, insbesondere die Steuerparameter, nicht im Einzelnen festgelegt werden, da diese vorzugsweise automatisch festgelegt werden. Steuerparameter sind die zur Steuerung der technischen Bestandteile der Behandlungseinrichtung im Einzelnen erforderlichen Parameter. Steuerparameter können Programmparameter sein oder können daraus für die technische Umsetzung abgeleitete Parameter sein, insbesondere automatisch bestimmte Parameter sein.

Vorzugsweise wählt ein Laborgerät, insbesondere der Laborautomat, ausgehend von der vom Benutzer gewählten Behandlungsart automatisch den passenden Satz von Programmparametern aus, dessen benutzerseitig erforderliche Programmparameter dann in den Schritten (b) und (c) vom Benutzer abgefragt wird. Der Programmparametersatz kann einerseits die benutzerseitig erforderlichen Programmparameter enthalten, und kann andererseits weitere Programmparameter enthalten. Diese weiteren Programmparameter können in Abhängigkeit von der gewählten Behandlungsart automatisch festgelegt werden, oder können in Abhängigkeit von mindestens einem, oder allen, vom Benutzer eingegebenen Programmparametern automatisch festgelegt werden, und/oder können in der Speichereinrichtung gespeichert sein. Die gespeicherten Pararametersätze sind -oder werden vom Laborgerät, insbesondere Laborautomat, - vorzugsweise für die Behandlungsart optimiert, so dass der Benutzer vorzugsweise kein Spezialwissen zur Optimierung der Parameter benötigt. Aus dem Programmparametersatz werden die Steuerparameter abgeleitet, die zur Durchführung der konkreten Behandlung mittels der Behandlungseinrichtung notwendig sind.

Für eine Behandlungsart ist vorzugsweise ein Programmparametersatz von für diese Behandlungsart spezifischen Programmparametern definiert. Die Programmparameter dieses Programmparametersatzes können insbesondere die für die Behandlung zu verwendenden Zubehörteile, z.B. Probenbehältnis, Transportbehältnis, und/oder die zu verwendenden Tools, und/oder weiteres Verbrauchsmaterial definieren.

Die Zuordnung von Programmparametersatz und Behandlungsart ist in der Speichereinrichtung des Laborgerätes, insbesondere des Laborautomaten, gespeichert. Vorzugsweise ist das eine Laborgerät, insbesondere der Laborautomat, dazu ausgebildet, dass der Benutzer weiterer solcher Zuordnungen im einen Laborgerät, insbesondere Laborautomat, speichern und/oder verwenden kann. Durch diese Zuordnung, in Kombination mit der übersichtlichen und gut strukturierten Abfrage der Programmparameter wird die Bedienung des Laborgeräts besonders effizient. Diese Zuordnung erfolgt vorzugsweise durch die Verwendung eines oder mehrere Programmmodule, wobei jeweils ein Programmmodul auf eine bestimmte Anwendung zugeschnitten ist:
Vorzugsweise weist das Laborgerät, insbesondere der Laborautomat, mindestens ein Programmmodul auf, wobei ein vorbestimmtes Programmmodul der Steuerung einer vorbestimmten Laboraufgabe zur Behandlung von Laborproben dient.

Die Erfindung betrifft ferner ein Verfahren gemäß Anspruch 11 zur Konfiguration eines Laborgerätes gemäß einem der Ansprüche 1 bis 7.

Bevorzugte Ausgestaltungen des erfindungsgemäßen Verfahrens lassen sich aus der Beschreibung der erfindungsgemäßen Konfigurationssteuerung und des erfindungsgemäßen Laborgeräts und von deren bevorzugten Ausgestaltungen ableiten.

Weitere bevorzugte Ausgestaltungen der erfindungsgemäßen Konfigurationssteuerung und des erfindungsgemäßen Laborgeräts und des erfindungsgemäßen Verfahrens ergeben sich aus der nachfolgenden Beschreibung der Ausführungsbeispiele in Zusammenhang mit den Figuren und deren Beschreibung. Gleiche Bauteile der Ausführungsbeispiele werden im Wesentlichen durch gleiche Bezugszeichen gekennzeichnet, falls dies nicht anders beschrieben wird oder sich nicht anders aus dem Kontext ergibt. Es zeigen:
Fig. 1 zeigt schematisch ein Ausführungsbeispiel der erfindungsgemäßen Konfigurationssteuerung.
Fig. 2 zeigt ein .Ausführungsbeispiel des erfindungsgemäßen Laborgeräts, das eine erfindungsgemäße Konfigurationssteuerung aufweist.
Fig. 3 zeigt ein Ausführungsbeispiel des erfindungsgemäßen Systems 300, das einen Server und mindestens ein Laborgerät 1 aufweist.
Fig. 4 zeigt, wie ein Ausführungsbeispiel des erfindungsgemäßen Verfahrens mit einer erfindungsgemäßen Konfigurationssteuerung eingesetzt werden kann.
Fig. 5 zeigt ein Ausführungsbeispiel des erfindungsgemäßen Verfahrens zur Konfiguration eines Laborgerätes.
Fig. 6 zeigt ein weiteres Ausführungsbeispiel des erfindungsgemäßen Laborgeräts, einen Thermocycler.
Fig. 7 zeigt als weiteres Ausführungsbeispiel des erfindungsgemäßen Laborgeräts, einen Labor-Gefrierschrank.

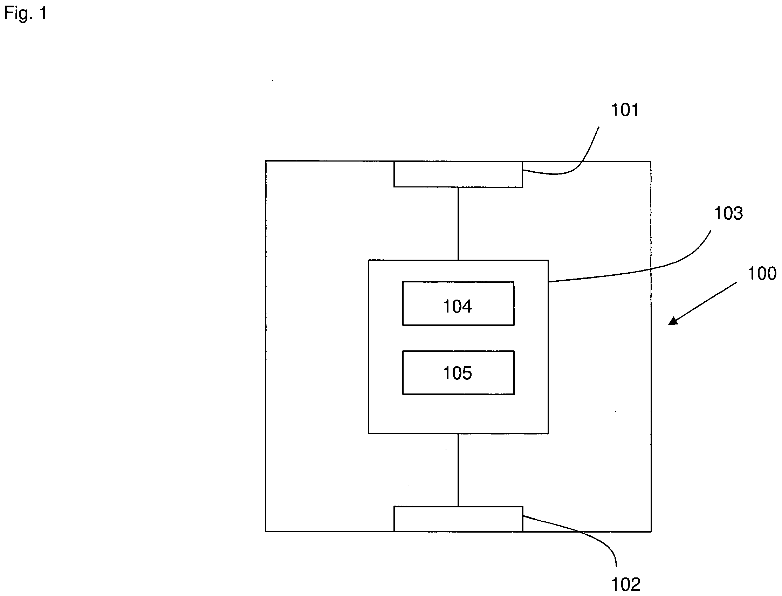

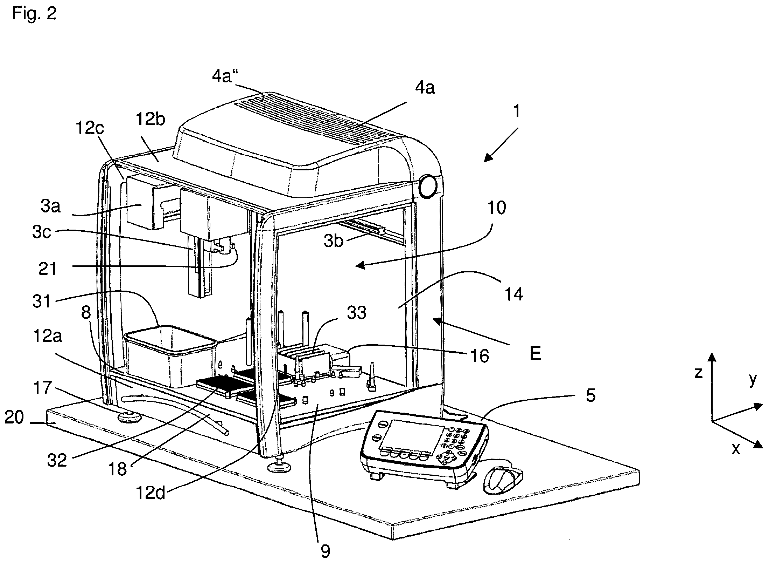

Fig. 1 zeigt die Konfigurationssteuerung 100. Die Konfigurationssteuerung 100 ist eingerichtet für ein Laborgerät, das der gerätegesteuerten Behandlung einer Laborprobe dient, insbesondere für das Laborgerät 1 in Fig. 2, wobei die Konfigurationssteuerung 100 aufweist: eine Schnittstelleneinrichtung 101 zur Herstellung einer ersten Datenverbindung mit einer Benutzerschnittstelleneinrichtung und eine Schnittstelleneinrichtung 102 zur Herstellung einer zweiten Datenverbindung mit einer Steuereinrichtung des Laborgerätes; und eine Steuereinrichtung 103. Diese weist eine Zugriffssteuerung 104 zur Identifikation eines über die erste Datenverbindung zugreifenden Benutzers und eine Datenverarbeitungseinrichtung 105 zur Verarbeitung von vorbestimmten benutzerabhängigen Konfigurationsdaten auf. Die Steuereinrichtung 103 ist dazu eingerichtet, einen zugreifenden Benutzer zu identifizieren und die dem identifizierten Benutzer zugeordneten benutzerabhängigen Konfigurationsdaten über die zweite Datenverbindung an das Laborgerät 1 zu übergeben, um dieses dadurch benutzerabhängig zu konfigurieren.

Fig. 2 zeigt das Laborgerät 1, das hier als Laborautomat 1 zur Behandlung von fluiden Proben, und zwar als Pipettierautomat (Laborautomat) ausgebildet ist. Der Laborautomat 1 dient der programmgesteuerten Behandlung dieser Proben.

Fig. 2 zeigt den Laborautomat 1 für die automatisierte Verarbeitung von flüssigen Proben, insbesondere für die programmgesteuerte Behandlung von flüssigen Proben. Der Laborautomat 1 ist ein Tischgerät und mit seinen vier Sockeln 17 auf dem Arbeitstisch 20 angeordnet. Er verfügt über eine elektronische Steuereinrichtung 2 (nicht gezeigt), die geeignet ist, einen Programmcode für die programmgesteuerte Behandlung der flüssigen Proben zu verarbeiten. Die Steuereinrichtung 2 ist in dem Steuerraum angebracht, der durch den Pfeil E bezeichnet ist und der von dem Arbeitsraum 10 durch eine vertikale Wand 14 getrennt wird. Der Steuerraum beherbergt auch die Spannungsversorgungskomponenten, die die geeignete Versorgungsspannung für die elektrischen Komponenten des Laborautomaten liefern. In die Steuereinrichtung 2 ist vorliegend die Steuereinrichtung 103 der Konfigurationssteuerung 100 aus Fig. 1 integriert.

Der Laborautomat 1 weist einen Behandlungsraum 10 zur Aufnahme der flüssigen zu behandelnden Proben auf, eine programmgesteuert steuerbare Probenbearbeitungseinrichtung 3, zum Durchführen von mindestens einem programmgesteuerten Behandlungsschritt an der mindestens einen Probe, die in dem Bearbeitungsraum angeordnet ist. Der Probenbearbeitungseinrichtung 3 sind die Komponenten 3a, 3b, 3c und 3d der Bewegungseinrichtung zugeordnet.

Der Laborautomat 1 weist ein Gehäuse 12 auf, das eine Vorderseite 12a aufweist, eine gegenüber der Vorderseite angeordnete Rückseite 12f (nicht gezeigt), eine Oberseite 12b, eine gegenüber der Oberseite angeordnete Unterseite 12e (nicht gezeigt) und gegenüberliegenden laterale Seiten 12c und 12d. Die Seiten 12a, 12b und 12c sind im Wesentlichen aus einem Material, das für sichtbares Licht transparent ist.

Die Vorderseite 12a, die im Wesentlichen wie eine Tür 12a, nämlich eine Schiebetür 12a ausgebildet ist, kann von Hand bewegt werden und/oder programmgesteuert bewegt werden und kann und sich nach unten im Wesentlichen entlang der z- Achse des kartesischen Koordinatensystems schließen. In Fig. 2a ist die geschlossene Position der Tür 12a gezeigt.

Der Behandlungsraum 10 ist durch die Vorderseite 12a und die beiden Seitenflächen 12c und 12d sowie die Wand 14 und die Arbeitsfläche 8, welche die obere Seite der Bodenplatte 9 bildet, beschränkt. Die Arbeitsfläche 8 stellt sechs Bearbeitungsstationen zur Verfügung. Die Bearbeitungsstationen sind im Wesentlichen ebene Flächen im Bearbeitungsbereich 8. Stifte dienen dazu, Lab-Ware, also beispielsweise Thermorack 33, Mikrotiterplatten 32 und Abfallbehälter 31 an der jeweiligen Bearbeitungsstation auszurichten. Die genaue Positionierung ermöglicht eine präzise robotergesteuerte Adressierung der Probenbehälter, insbesondere der Vertiefungen in den Mikrotiterplatten 32. Eine magnetische Trennvorrichtung 16 ist in der Nähe der Wand 14 angeordnet, wo ein Thermorack 33, d.h. eine temperaturgesteuerte Probengefäßhalterung angeordnet ist. Die magnetische Gabel (nicht gezeigt) der magnetischen Trennvorrichtung 16 fährt von der Seite in entsprechende Aufnahmekanäle des Thermoracks ein, um seitlich an den Laborgefäßen (Probenröhrchen) ihre magnetische Wirkung zu entfalten.

Der Laborautomat 1 weist zwei Dekontaminationseinrichtungen auf, eine elektronisch steuerbare Luftreinigungsvorrichtung, 4a, 4a" für die Reinigung der Luft im Behandlungsraum, die elektronisch und digital durch die Steuereinrichtung gesteuert wird und die eine Belüftungsvorrichtung aufweist. Die Belüftungsvorrichtung weist drei Ventilatoren auf (nicht dargestellt), die einen Luftstrom von außerhalb der Vorrichtung zu in den Behandlungsraum transportieren.

Die Steuereinrichtung 2 weist ein Steuerprogramm auf. Der Laborautomat 1 weist eine Probenbearbeitungseinrichtung 3 auf, die eine Bewegungseinrichtung aufweist, mit drei Schienenelementen 3a, 3b, 3c, die Bewegungen entlang der y, x und z- Achse des kartesischen Koordinatensystems entsprechen. Zum Antrieb der Bewegung entlang der gewünschten Richtung sind elektronisch regelbare Linearmotoren vorgesehen. Auf diese Weise kann der Montagekopf 21 in jede gewünschte Position zugänglich in den Bearbeitungsraum 10 bewegt werden. Die Bewegungseinrichtung ist Teil eines Robotersystems der Probenbearbeitungseinrichtung 3. Mit dieser ist der Montagekopf 21 programmgesteuert transportierbar. Mit dem Montagekopf ist ein Werkzeuggerät verbindbar, z. B. ein Pipettierkopf oder ein Greifer. Die im Behandlungsraum angeordneten Bauteile, insbesondere die Probenbearbeitungseinrichtung 3, sind Bestandteil der Behandlungsvorrichtung des Laborautomaten.

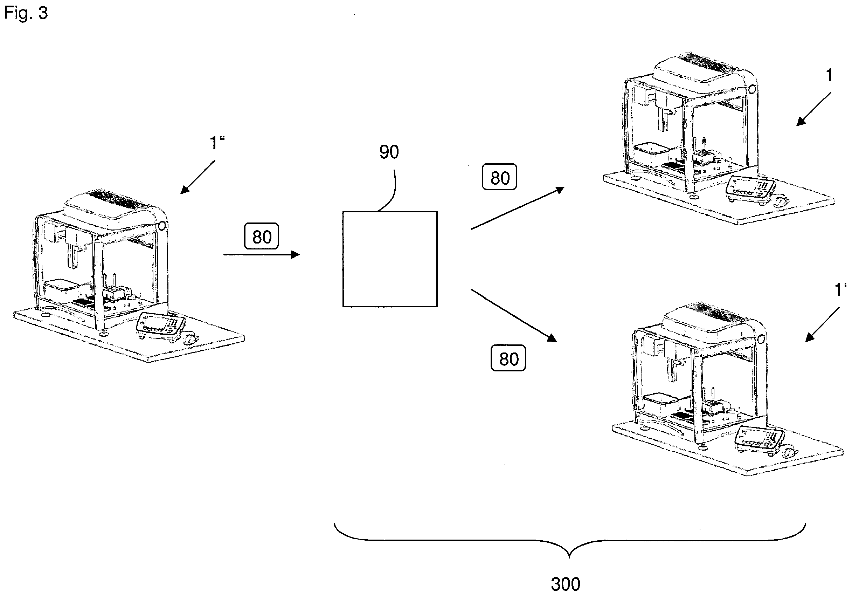

Der Laborautomat weist eine als Modul ausgeführte Benutzerschnittstelleneinrichtung 5 auf, mit der ein Benutzer sich lokal am Laborautomat anmelden kann. Er wird dann von der Zugriffssteuerung der Konfigurationssteuerung identifiziert. Die Konfigurationssteuerung sendet die Identifikationsdaten des Benutzers im vorliegenden Beispiel an einen externen Server 90 (siehe Fig. 3) und empfängt von dem externen Server 90 die benutzerabhängigen Konfigurationsdaten 80. Anhand der Konfigurationsdaten 80 wird das Laborgerät 1 automatisch konfiguriert. Die benutzerabhängigen Konfigurationsdaten 80 können z.B. zuvor auf einem Laborgerät 1' vom Benutzer eingestellt worden sein (Fig. 3). Gemäß einem Aspekt der Erfindung kann der Benutzer auf jedem Laborgerät 1, 1' (Fig. 3), das diese benutzerabhängigen Konfigurationsdaten 80 zur Konfiguration verwenden kann, ohne erneute Einstellung der Konfigurationsdaten oder zumindest eines Teils davon das entsprechende Laborgerät benutzen. Insbesondere wird dem Benutzer an den benutzerabhängig konfigurierten Laborgeräten 1, 1' die gewohnte benutzerabhängige Benutzeroberfläche auf der Anzeigeneinrichtung der Benutzerschnittstelle 5 angezeigt.

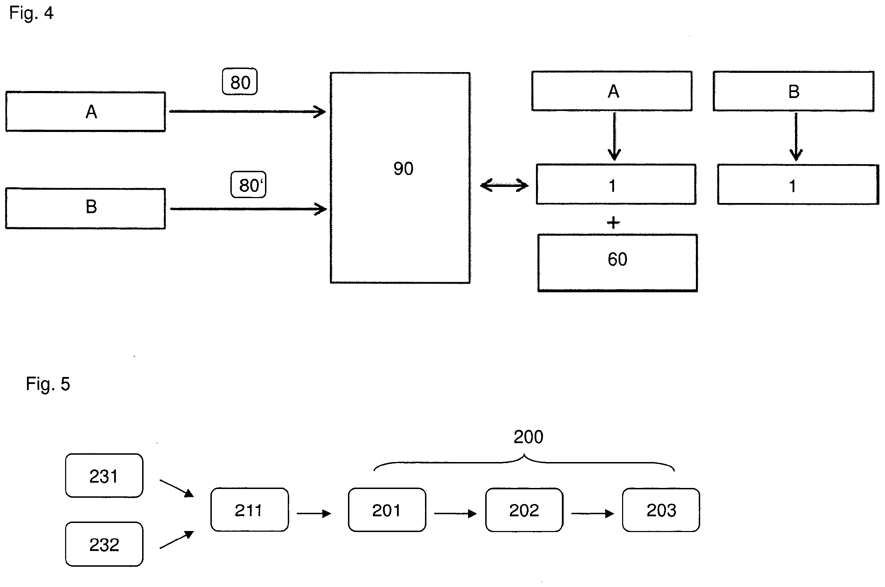

Fig. 4 zeigt, wie ein Ausführungsbeispiel des erfindungsgemäßen Verfahrens mit einer erfindungsgemäßen Konfigurationssteuerung eingesetzt werden kann. In diesem Beispiel wird der Fall verglichen, dass zunächst der Benutzer A das Laborgerät 1 verwendet, und später der Benutzer B dasselbe Laborgerät 1 verwendet. Benutzer A ist ein unerfahrener Benutzer, Benutzer B ist ein erfahrener Benutzer. Zunächst müssen benutzerabhängige Konfigurationsdaten 80 existieren, die dem Benutzer A zuordenbar sind, und benutzerabhängige Konfigurationsdaten 80' existieren, die dem Benutzer B zuordenbar sind. Die benutzerabhängigen Konfigurationsdaten können dem jeweiligen Benutzer manuell zugeordnet werden, oder anhand eines Kriteriums automatisch zugeordnet werden. Letzteres ist vorliegend der Fall. Jedem Benutzer werden anhand seiner Qualifikation, die zuvor festgelegt wurde und die mit seinen Identifikationsdaten eindeutig verknüpft ist, die der Qualifikation zugeordneten benutzerabhängigen Konfigurationsdaten zugeordnet (Schritte 231, 232 in Fig. 5). Die Informationen über diese Zuordnungen sind in einer Datenbank des Servers 90 gespeichert. Die benutzerabhängigen Konfigurationsdaten werden auf dem Server 90 gespeichert und bereitgehalten. Meldet sich nun der Benutzer A am Laborgerät 1 an (Schritt 211 in Fig. 5), dann wird der Benutzer von der Zugriffssteuerung der Konfigurationssteuerung identifiziert (Schritt 201 in Fig. 5), insbesondere durch ein Authentifizierungsverfahren. Das Laborgerät sendet die Identifikationsdaten an den Server 90 und empfängt von diesem die entsprechenden benutzerabhängigen Konfigurationsdaten 80 (Schritt 202 in Fig. 5). In Abhängigkeit von diesen Konfigurationsdaten konfiguriert die Konfigurationssteuerung das Laborgerät in benutzerabhängiger Weise (Schritt 203 in Fig. 5), und zwar für den unerfahrenen Benutzer A anders als für den erfahrenen Benutzer B. Der unerfahrene Benutzer A erhält eine Konfiguration, die vorsieht, dass dem Benutzer A über die Benutzeroberfläche der Benutzerschnittstelleneinrichtung 5 eine Hilfedatei 60 zur Verfügung gestellt wird. Dies ist beim Benutzer B nicht vorgesehen. Auf diese Weise wird für den Benutzer A die Benutzung des Laborgeräts 1 einfacher und die Produktivität im Labor wird verbessert.

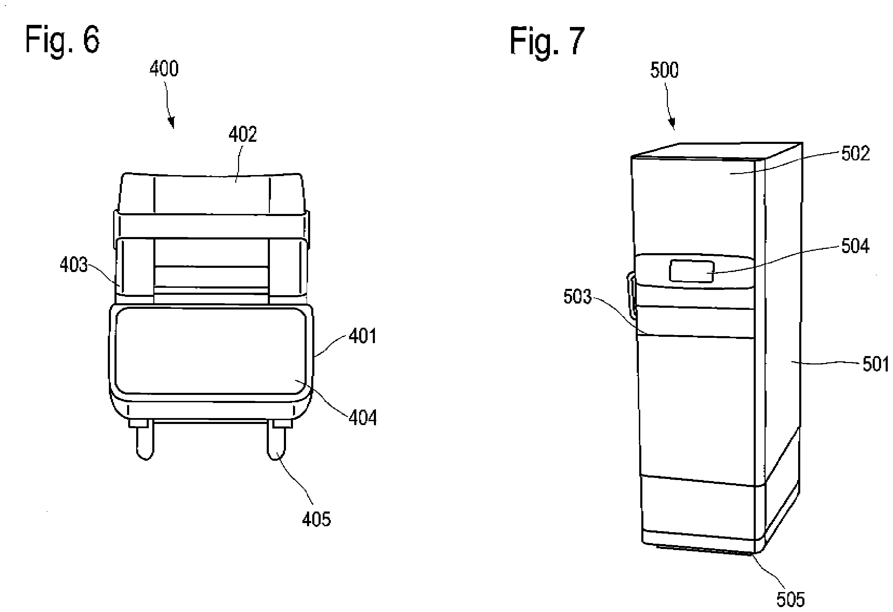

Fig. 6 zeigt als weiteres Ausführungsbeispiel das Laborgerät 400, einen Thermocycler. Das Laborgerät 400 ist ein Tischgerät und mit seinen Füßen 405 auf einem Arbeitstisch (nicht abgebildet) angeordnet. Es verfügt über eine elektronische Steuereinrichtung 406 (nicht gezeigt), die geeignet ist, einen Programmcode für die programmgesteuerte Behandlung der in der Regel flüssigen Proben zu verarbeiten. Die Behandlung ist üblicherweise eine zeitgesteuerte Temperierung. Die Steuereinrichtung 406 weist eine Zugriffssteuerung zur Identifikation eines über die erste Datenverbindung zugreifenden Benutzers und eine Datenverarbeitungseinrichtung zur Verarbeitung von vorbestimmten benutzer-abhängigen Konfigurationsdaten auf, wobei diese Konfigurationsdaten zur benutzerabhängigen Behandlung der mindestens einen Laborprobe verwendbar sind, wobei die Steuereinrichtung dazu eingerichtet ist, einen zugreifenden Benutzer zu identifizieren, und dem identifizierten Benutzer zugeordnete benutzerabhängige Konfigurationsdaten über eine zweite Datenverbindung an das Laborgerät zu übergeben, um dieses dadurch benutzerabhängig zu konfigurieren.

Die Steuereinrichtung 406 ist in dem Gehäuse 401 untergebracht. Das Gehäuse beherbergt auch die Spannungsversorgungskomponenten, die die geeignete Versorgungsspannung für die elektrischen Komponenten des Laborgeräts liefern. In die Steuereinrichtung 406 ist die Steuereinrichtung der Zugriffssteuerung integriert.

Das Laborgerät 400 weist einen Behandlungsraum 403 zur Aufnahme der flüssigen zu behandelnden Proben auf. Der Behandlungsraum umfasst mindestens eine Behandlungseinrichtung 407 (nicht abgebildet) zum Durchführen von mindestens einem programmgesteuerten Behandlungsschritt an der mindestens einen Probe, die in dem Behandlungsraum angeordnet ist.

Die Steuereinrichtung 406 weist ein Steuerprogramm auf.

Das Laborgerät weist eine Benutzerschnittstelleneinrichtung 404 auf, mit der ein Benutzer sich lokal am Laborgerät anmelden kann.

Fig. 7 zeigt als weiteres Ausführungsbeispiel das Laborgerät 500, ein Labor-Gefrierschrank. Das Laborgerät ist ein Standgerät, das mit den Füßen 505 auf dem Boden (nicht abgebildet) positioniert wird. Es verfügt über eine elektronische Steuereinrichtung 506 (nicht gezeigt), die geeignet ist, die Temperierung des Laborgeräts durch einen Programmcode einzustellen, zu regeln und zu überwachen und die Behandlung der in der Regel flüssigen Proben zu steuern. Die Behandlung ist üblicherweise eine Temperierung. Die Steuereinrichtung 506 weist eine Zugriffssteuerung zur Identifikation eines über die erste Datenverbindung zugreifenden Benutzers und eine Datenverarbeitungseinrichtung zur Verarbeitung von vorbestimmten benutzer-abhängigen Konfigurationsdaten auf, wobei diese Konfigurationsdaten zur benutzerabhängigen Behandlung der mindestens einen Laborprobe verwendbar sind, wobei die Steuereinrichtung dazu eingerichtet ist, einen zugreifenden Benutzer zu identifizieren, und dem identifizierten Benutzer zugeordnete benutzerabhängige Konfigurationsdaten über eine zweite Datenverbindung an das Laborgerät zu übergeben, um dieses dadurch benutzerabhängig zu konfigurieren.

Die Steuereinrichtung 506 ist in dem Gehäuse 501 untergebracht. Das Gehäuse beherbergt auch die Spannungsversorgungskomponenten, die die geeignete Versorgungsspannung für die elektrischen Komponenten des Laborgeräts liefern. In die Steuereinrichtung 506 ist die Steuereinrichtung der Zugriffssteuerung integriert.

Das Laborgerät 500 weist einen Behandlungsraum 503 zur Aufnahme der flüssigen zu behandelnden Proben auf. Der Behandlungsraum umfasst mindestens eine Behandlungseinrichtung 507 (nicht abgebildet) zum Durchführen von mindestens einem programmgesteuerten Behandlungsschritt an der mindestens einen Probe, die in dem Behandlungsraum angeordnet ist. Der programmgesteuerte Behandlungsschritt ist in diesem Fall die permanente Temperierung bei einer definierten Temperatur.

Die Steuereinrichtung 506 weist ein Steuerprogramm auf.

Das Laborgerät weist eine Benutzerschnittstelleneinrichtung 504 auf, mit der ein Benutzer sich lokal am Laborgerät anmelden kann.

### Anhang 1

### Mögliche Programmparameter in Abhängigkeit vom Typ des Laborgeräts

| **Gerät** | **Wichtigste Parameter** | | | | |
|---|---|---|---|---|---|
| Centrifuge | Temperatur | Geschwindigkeit | | Zeit | |
| | | | | | |
| Cycler | Temperatur | | | Zeit | |
| | | | | | |
| Biospektrometer | Temperatur (kinetic) | | | | Ergebnis |
| Plattenreader | Temperatur | Probenanzahl | | | Ergebnis |
| Cellcounter | | | | | Ergebnis |
| | | | | | |
| Inkubator | Temperatur | CO2/O2 | rel. Luftfeuchte | Zeit | |
| (Thermo-)Mixer | Temperatur | Geschwindigkeit | | Zeit | |
| Shaker | Temperatur | Geschwindigkeit | | | |
| Pi pettensteuerung | Probenvolumen | | Pipettierwerkzeug | | Transfertyp |
| Freezer | Temperatur | Alarmwert | | | |
| Laborautomat | Probenanzahl | Probenvolumen | Pipettier-Werkzeug | Quelle/ Ziel | Transfertyp (Pipett ren/ Dispensieren) |
| Fermenter/Bioreaktor | | Rührdrehzahl | Gelöstsauerstoff (DO) | pH-Wert | Dosiergeschwindig (Pumpen) |
| Biosafety Cabinet | | Strömungsgeschwindigkeit | Filterbetriebsdauer | Lüfterbetriebsdauer | Luftmenge |

| | | |
|---|---|---|
| Zu betrachtende Use Cases (Beispiele): | Remote Monitoring | |
| | Remote Control | |
| | Booking Schedule | |
| | Service-Zugriff | |
| | Preprogramming | |
| Zu betrachtende Rollen (Beispiele): | Admin | |
| | LabUser | |
| | Inexperienced | |
| | Manager | |
| | Service | |
| Zu betrachtende Geräte (Beispiele): | Cycler | n Behandlungseinrichtungen (Thermoblöcke) |
| Annahme: Zugriffrechte sind unabhängig vom Gerät | Centrifuge | 1 Behandlungseinrichtung (Rotor) |
| | | 1 Behandlungseinrichtung (Schüttelplattform, |
| | Shaker | auch mehrere denkbar) |
| | Incubator | 1 Behandlungseinrichtung |
| | Cell Counter | 1 Behandlungseinrichtung |
| | BSC | 1 Behandlungseinrichtung |
| | | n Behandlungseinrichtungen denkbar (unterschielich ansteuerbare Kühlebenen) |
| | Freezer | |
| | Biospectrometer | 1 Behandlungseinrichtung |

| **Use Case:** | **Remote Monito-ring** | |
|---|---|---|
| **User: Admin** | | |
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Booking | Admin | j |
| =Leerlauf? | LabUser | j |
| | Inexperienced | j |
| | Manager | j |
| Standby | -- | j |

| **Use Case:** | **Remote Monitoring** | |
|---|---|---|
| **User: LabUser** | | |
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Standby | -- | j |

| **Use Case:** | **Remote Monito-ring** | |
|---|---|---|
| **User: Inexperienced** | | |
| Zustand | Rolle eingeloggt | Zugriff möglich ? |
| Leerlauf (ready) | Admin | n |
| | LabUser | n |
| | Inexperienced | n |
| | Manager | n |
| Programmiert | Admin | n |
| =Leerlauf? | LabUser | n |
| | Inexperienced | n |
| | Manager | n |
| Gestartet (running) | Admin | n |
| | LabUser | n |
| | Inexperienced | n |
| | Manager | n |
| Gestoppt (finished) | Admin | n |
| =Leerlauf? | LabUser | n |
| | Inexperienced | n |
| | Manager | n |
| Standby | -- | j |

| **User: Manager** | | |
|---|---|---|
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Standby | -- | j |

| **Use Case:** | **Remote Control** | |
|---|---|---|
| **User: Admin** | | |
| Zustand | Rolle eingeloggt | Zugriff möglich ? |
| Leerlauf (ready) | Admin | n |
| | LabUser | j |
| | Inexperienced | j |
| | Manager | j |
| Programmiert | Admin | n |
| =Leerlauf? | LabUser | j |
| | Inexperienced | j |
| | Manager | j |
| Gestartet (running) | Admin | n |
| | LabUser | j |
| | Inexperienced | j |
| | Manager | j |
| Gestoppt (finished) | Admin | n |
| =Leerlauf? | LabUser | j |
| | Inexperienced | j |
| | Manager | j |
| Booking | Admin | n |
| =Leerlauf? | LabUser | j |
| | Inexperienced | j |
| | Manager | j |
| Standby | -- | n |

| **User: LabUser** | | |
|---|---|---|
| Zustand | Rolle eingeloggt | Zugriff möglich ? |
| Leerlauf (ready) | Admin | n |
| | LabUser | n |
| | Inexperienced | j |
| | Manager | n |
| Programmiert | Admin | n |
| =Leerlauf? | LabUser | n |
| | Inexperienced | j |
| | Manager | n |
| Gestartet (running) | Admin | n |
| | LabUser | n |
| | Inexperienced | j |
| | Manager | n |
| Gestoppt (finished) | Admin | n |
| =Leerlauf? | LabUser | n |
| | Inexperienced | j |
| | Manager | n |
| Booking | Admin | n |
| =Leerlauf? | LabUser | n |
| | Inexperienced | j |
| | Manager | n |
| Standby | -- | n |

| **User: Inexperienced** | | |
|---|---|---|
| Zustand | Rolle eingeloggt | Zugriff möglich ? |
| Leerlauf (ready) | Admin | n |
| | LabUser | n |
| | Inexperienced | n |
| | Manager | n |
| Programmiert | Admin | n |
| =Leerlauf? | LabUser | n |
| | Inexperienced | n |
| | Manager | n |
| Gestartet (running) | Admin | n |
| | LabUser | n |
| | Inexperienced | n |
| | Manager | n |
| Gestoppt (finished) | Admin | n |
| =Leerlauf? | LabUser | n |
| | Inexperienced | n |
| | Manager | n |
| Booking | Admin | n |
| =Leerlauf? | LabUser | n |
| | Inexperienced | n |
| | Manager | n |
| Standby | -- | n |

| **User: Manager** | | |
|---|---|---|
| Zustand | Rolle eingeloggt | Zugriff möglich ? |
| Leerlauf (ready) | Admin | n |
| | LabUser | j |
| | Inexperienced | n |
| | Manager | n |
| Programmiert | Admin | n |
| =Leerlauf? | LabUser | j |
| | Inexperienced | n |
| | Manager | n |
| Gestartet (running) | Admin | n |
| | LabUser | j |
| | Inexperienced | n |
| | Manager | n |
| Gestoppt (finished) | Admin | n |
| =Leerlauf? | LabUser | j |
| | Inexperienced | n |
| | Manager | n |
| Booking | Admin | n |
| =Leerlauf? | LabUser | j |
| | Inexperienced | n |
| | Manager | n |
| Standby | -- | n |

| **Use Case:** | **Booking Schedule** | |
|---|---|---|
| **User: Admin** | | |
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Booking | Admin | n |
| =Leerlauf? | LabUser | n |
| | Inexperienced | n |
| | Manager | n |
| Standby | - | j |

| **User: LabUser** | | |
|---|---|---|
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Booking | Admin | n |
| =Leerlauf? | LabUser | n |
| | Inexperienced | n |
| | Manager | n |
| Standby | -- | j |

| **User: Inexperienced** | | |
|---|---|---|
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerl,auf? | LabUser | j |
| | Inexperienced | j |
| | Manager | j |
| Booking | Admin | n |
| =Leerlauf? | LabUser | n |
| | Inexperienced | n |
| | Manager | n |
| Standby | -- | j |

| **User: Manager** | | |
|---|---|---|
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Booking | Admin | n |
| =Leerlauf? | LabUser | n |
| | Inexperienced | n |
| | Manager | n |
| Standby | -- | j |

| **Use Case:** | **Preprogramming** | |
|---|---|---|
| **User: Admin** | | |
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Booking | Admin | j |
| =Leerlauf? | LabUser | j |
| | Inexperienced | j |
| | Manager | j |
| Standby | -- | j |

| **User: LabUser** | | |
|---|---|---|
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Booking | Admin | j |
| =Leerlauf? | LabUser | j |
| | Inexperienced | j |
| | Manager | j |
| Standby | -- | j |

| **User: Inexperienced** | | |
|---|---|---|
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | j |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Booking | Admin | j |
| =Leerlauf? | LabUser | j |
| | Inexperienced | j |
| | Manager | j |
| Standby | -- | j |

| **User: Manager** | | |
|---|---|---|
| Zustand | Rolle eingeloggt | Zugriff möglich ? |
| Leerlauf (ready) | Admin | j |
| | LabUser | j |
| | Inexperienced | j |
| | Manager | j |
| Programmiert | Admin | j |
| =Leerlauf? | LabUser | j |
| | Inexperienced | j |
| | Manager | j |
| Gestartet (running) | Admin | i |
| | LabUser | j |
| | Inexperienced | j |
| | Manager | j |
| Gestoppt (finished) | Admin | j |
| =Leerlauf? | LabUser | j |
| | Inexperienced | j |
| | Manager | j |
| Booking | Admin | j |
| =Leerlauf? | LabUser | j |
| | Inexperienced | j |
| | Manager | j |
| Standby | -- | j |

| **Use Case:** | **Remote Service-Zugriff** | |
|---|---|---|
| **User: Service** | | |
| Zustand | Rolle eingeloggt | Zugriff möglich ? |
| Leerlauf (ready) | Admin | j |
| | LabUser | n |
| | Inexperienced | n |
| | Manager | j |
| Programmiert | Admin | j |
| =Leerlauf? | LabUser | n |
| | Inexperienced | n |
| | Manager | j |
| Gestartet (running) | Admin | j |
| | LabUser | n |
| | Inexperienced | n |
| | Manager | j |
| Gestoppt (finished) | Admin | j |
| =Leerlauf? | LabUser | n |
| | Inexperienced | n |
| | Manager | j |
| Booking | Admin | j |
| =Leerlauf? | LabUser | n |
| | Inexperienced | n |
| | Manager | j |
| Standby | -- | j |

## Patentansprüche

1. Laborgerät (1; 1'; 1") zur gerätegesteuerten Behandlung mindestens einer Laborprobe, wobei das Laborgerät aus der Gruppe eines der folgenden Laborgeräte ausgewählt wird: eine Laborzentrifuge, ein Thermocycler, ein Laborspektralphotometer, ein Zellenzählgerät, ein Labor-Inkubator, ein Labor-Schüttelgerät, ein Laborgefriergerät, ein Bioreaktor, eine biologische Sicherheitswerkbank, ein Probenplatten-Lesegerät, ein Laborautomat zur Behandlung von fluiden Proben, und
wobei das Laborgerät (1; 1'; 1") aufweist:
• mindestens eine Behandlungseinrichtung zur gerätegesteuerten Behandlung der mindestens einen Laborprobe;
• eine Steuereinrichtung zur benutzerabhängigen Steuerung des Laborgerätes, insbesondere der Behandlungseinrichtung, wobei
die Steuereinrichtung dazu eingerichtet ist, während des Betriebs des Laborgeräts bei der Festlegung der manuellen Konfiguration durch einen Benutzer, Konfigurationsdaten zu erfassen und als benutzerabhängige Konfigurationsdaten in einer Speichereinrichtung zu speichern, um zu ermöglichen, diese Konfigurationsdaten aus der Speichereinrichtung auf ein anderes Laborgerät zu übertragen, wenn der Benutzer diese auf einem anderen Laborgerät verwenden will, und
• eine Konfigurationssteuerung (100) zur benutzerabhängigen Konfiguration des Laborgerätes, wobei die Konfigurationssteuerung aufweist:
▪ mindestens eine Schnittstelleneinrichtung zur Herstellung einer ersten Datenverbindung zu einer Benutzerschnittstelleneinrichtung und zur Herstellung einer zweiten Datenverbindung zu der Steuereinrichtung des Laborgerätes, wobei die mindestens eine Schnittstelleneinrichtung der Konfigurationssteuerung zur Herstellung mindestens einer dritten Datenverbindung zu mindestens einer externen Datenverarbeitungseinrichtung, insbesondere einem Server, ausgebildet ist, die eine Speichereinrichtung aufweist, auf der die benutzerabhängigen Konfigurationsdaten speicherbar sind und;
• eine Steuereinrichtung der Konfigurationssteuerung, die eine Zugriffssteuerung zur Identifikation eines über die erste Datenverbindung zugreifenden Benutzers und eine Datenverarbeitungseinrichtung zur Verarbeitung von vorbestimmten benutzerabhängigen Konfigurationsdaten aufweist, wobei diese Konfigurationsdaten zur benutzerabhängigen Behandlung der mindestens einen Laborprobe verwendbar sind,
wobei die Steuereinrichtung der Konfigurationssteuerung dazu eingerichtet ist,
▪ einen zugreifenden Benutzer zu identifizieren,
▪ Konfigurationsdaten über die mindestens eine dritte Datenverbindung zu empfangen und
▪ dem identifizierten Benutzer zugeordnete benutzerabhängige Konfigurationsdaten über eine zweite Datenverbindung an das Laborgerät zu übergeben, um dieses dadurch benutzerabhängig zu konfigurieren,
wobei die Steuereinrichtung des Laborgerätes dazu eingerichtet ist,
▪ die benutzerabhängigen Konfigurationsdaten von der Konfigurationssteuerung zu empfangen und
▪ das Laborgerät gemäß der benutzerabhängigen Konfigurationsdaten zu steuern, und
▪ in Abhängigkeit von dem identifizierten Benutzer die benutzerabhängigen Konfigurationsdaten zu verwenden, die einen Satz von benutzerabhängigen Programmparametern bestimmen, mit dem eine programmgesteuerte Behandlung mittels der Behandlungseinrichtung benutzerabhängig gesteuert werden kann,

2. Laborgerät gemäß Anspruch 1,
wobei die Steuereinrichtung der Konfigurationssteuerung dazu ausgebildet ist,
• die über die wenigstens eine dritte Datenverbindung empfangenen Konfigurationsdaten auszuwerten, und
• dem identifizierten Benutzer benutzerabhängige Konfigurationsdaten zuzuordnen, die zur benutzerabhängigen Behandlung der mindestens einen Laborprobe verwendbar sind.

3. Laborgerät gemäß Anspruch 1 oder 2,
wobei die Steuereinrichtung der Konfigurationssteuerung dazu ausgebildet ist, über die wenigstens eine dritte Datenverbindung Identifizierungsdaten, die den Benutzer identifizieren, an die mindestens eine externe Datenverarbeitungseinrichtung zu senden und die dem identifizierten Benutzer zugeordneten Konfigurationsdaten als diese benutzerabhängigen Konfigurationsdaten für das Laborgerät von der externen Datenverarbeitungseinrichtung zu empfangen.

4. Laborgerät gemäß einem der vorherigen Ansprüche, das aufweist
eine Benutzerschnittstelleneinrichtung, um dem identifizierten Benutzer den Zugriff auf das Laborgerät zu ermöglichen, und
wobei die Zugriffssteuerung dazu eingerichtet ist, dem identifizierten Benutzer mittels der Benutzerschnittstelleneinrichtung den Zugriff auf das Laborgerät über die erste Datenverbindung zu ermöglichen.

5. Laborgerät gemäß einem der vorherigen Ansprüche, wobei die Zugriffssteuerung dazu eingerichtet ist, dem identifizierten Benutzer den Zugriff auf das Laborgerät nur dann zu ermöglichen, wenn wenigstens eine vorbestimmte Zugriffsbedingung in Bezug auf den identifizierten Benutzer erfüllt ist.

6. Laborgerät gemäß einem der vorherigen Ansprüche, das eine Benutzerschnittstelleneinrichtung aufweist zur Eingabe von Daten durch den Benutzer und mit mindestens einer Anzeigeeinrichtung zur Anzeige von Informationen für den Benutzer in mindestens einer grafischen Benutzeroberfläche, wobei die Steuereinrichtung des Laborgeräts dazu ausgebildet ist, die Anzeigeneinrichtung derart zu steuern, dass in Abhängigkeit von dem identifizierten Benutzer und unter Verwendung der benutzerabhängigen Konfigurationsdaten eine benutzerabhängige Gestaltung der Benutzeroberfläche verwendet wird.

7. Laborgerät gemäß Anspruch 6, wobei die Steuereinrichtung des Laborgeräts die Behandlung in Abhängigkeit von mindestens einem von einem Benutzer gewählten Nutzerparameter steuert und dazu ausgebildet ist, mindestens einen Nutzerparameter in einem benutzerabhängigen Abfragevorgang mittels der Benutzerschnittstelleneinrichtung zu erfassen, indem
i) dem Benutzer mindestens eine benutzerabhängige, abhängig von einer Benutzerklasse, z.B. Qualifikation, oder auch individuell abhängig, Abfragemaske auf der Benutzeroberfläche angezeigt wird, wobei die Abfragemaske eine Anzeigenseite ist mit mindestens einem Anzeigebereich zur Anzeige des variablen Wertens eines Programmparameters bzw. Nutzerparameters, und
ii) durch Erfassen mindestens einer Eingabe des Benutzers in der mindestens einen Abfragemaske mindestens ein Nutzerparameter erfasst wird.

8. System (300) zur gerätegesteuerten Behandlung mindestens einer Laborprobe, aufweisend mindestens ein Laborgerät gemäß einem der vorherigen Ansprüche und mindestens eine externe Datenverarbeitungseinrichtung, insbesondere einen Server, die zum Austausch von Daten, insbesondere Konfigurationsdaten, miteinander verbunden sind.

9. System gemäß Anspruch 8, aufweisend mindestens ein erstes und ein zweites Laborgerät gemäß einem der Ansprüche 1 bis 7, die jeweils dazu eingerichtet sind, erste benutzerabhängige Konfigurationsdaten zu verarbeiten, die zur benutzerabhängigen Steuerung des ersten Laborgerätes verwendbar sind, und die auch zur benutzerabhängigen Steuerung des zweiten Laborgerätes verwendbar sind.

10. System gemäß einem der vorherigen Ansprüche 8 oder 9, das eine externe Datenverarbeitungseinrichtung aufweist, und das eine Benutzerschnittstelleneinrichtung aufweist, mit dem aus den Eingaben des Benutzers benutzerabhängige Konfigurationsdaten erzeugt werden können.

11. Verfahren (200) zur Konfiguration eines Laborgerätes gemäß einem der Ansprüche 1 bis 7, wobei das Verfahren die Schritte aufweist:
• Identifizieren eines Benutzers mittels der Zugriffssteuerung der Steuereinrichtung; und
• Konfiguration des Laborgerätes oder Konfiguration einer Behandlung unter Verwendung von benutzerabhängigen Konfigurationsdaten.

## Claims

1. A laboratory apparatus (1; 1'; 1") for apparatus-controlled treatment of at least one laboratory sample, said laboratory apparatus being selected from the group of one of the following laboratory apparatuses: a laboratory centrifuge, a thermocycler, a laboratory spectrophotometer, a cell counter, a laboratory incubator, a laboratory shaker, a laboratory freezer, a bioreactor, a biological safety workbench, a sample plate reader, a laboratory automat for treatment of fluid samples, and
wherein the laboratory apparatus (1; 1'; 1") comprises:
• at least one treatment device for apparatus-controlled treatment of the at least one laboratory sample;
• a control device for user-dependent control of the laboratory apparatus, particularly of the treatment device, wherein
the control device is configured to acquire configuration data during operation of the laboratory apparatus when the manual configuration is determined by a user and to store this configuration data as user-dependent configuration data in a memory device to enable this configuration data to be transferred from the memory device to another laboratory apparatus when the user wishes to use it on another laboratory apparatus, and
• a configuration control (100) for the user-dependent configuration of the laboratory apparatus, the configuration control comprising:
▪ at least one interface device for establishing a first data connection to a user interface device and for establishing a second data connection to the control device of the laboratory apparatus, the at least one interface device of the configuration control being designed for establishing at least a third data connection to at least one external data processing device, in particular a server, which comprises a memory device on which the user-dependent configuration data can be stored, and;
• a control device of the configuration control comprising an access control for identifying a user accessing via said first data connection and a data processing device for processing predetermined user-dependent configuration data, said configuration data being usable for user-dependent treatment of said at least one laboratory sample,
wherein the control device of the configuration control is adapted to
▪ identify an accessing user,
▪ receive configuration data via the at least one third data connection, and
▪ transfer user-dependent configuration data assigned to the identified user to the laboratory apparatus via a second data connection in order to configure the laboratory apparatus in a user-dependent manner,
wherein the control device of the laboratory apparatus is adapted to
▪ receive the user-dependent configuration data from the configuration control, and
▪ control the laboratory apparatus according to the user-dependent configuration data, and
▪ depending on the identified user, to use the user-dependent configuration data to determine a set of user-dependent program parameters with which a program-controlled treatment by means of the treatment device can be controlled in a user-dependent manner.

2. Laboratory apparatus according to claim 1,
wherein the control device of the configuration control is configured to
• evaluate the configuration data received via the at least one third data connection, and
• to assign user-dependent configuration data to the identified user, which configuration data can be used for user-dependent treatment of the at least one laboratory sample.

3. Laboratory apparatus according to claim 1 or 2,
wherein the control device of the configuration control is configured to send identification data identifying the user to the at least one external data processing device via the at least one third data connection and to receive the configuration data associated with the identified user as said user-dependent configuration data for the laboratory apparatus from the external data processing device.

4. Laboratory apparatus according to any one of the preceding claims, comprising
a user interface device for enabling the identified user to access the laboratory apparatus, and
wherein the access control is arranged to enable the identified user to access the laboratory apparatus via the first data connection by means of the user interface device.

5. Laboratory apparatus according to any one of the preceding claims, wherein the access control is arranged to allow the identified user to access the laboratory apparatus only if at least one predetermined access condition is met with respect to the identified user.

6. Laboratory apparatus according to any one of the preceding claims, comprising a user interface device for input of data by the user and at least one display device for display of information to the user in at least one graphical user interface, wherein the control device of the laboratory apparatus is configured to control the display device in such a way that a user-dependent design of the user interface is used depending on the identified user and using the user-dependent configuration data.

7. Laboratory apparatus according to claim 6, wherein the control device of the laboratory apparatus controls the treatment depending on at least one user parameter selected by a user and is designed to retrieve at least one user parameter in a user-dependent retrieval process by means of the user interface device, in that
i) displaying to the user at least one user-dependent (=dependent on a user class, e.g. qualification, or also individually dependent) query screen on the user interface, the query screen being a display screen having at least one display area for displaying the variable value of a program parameter or user parameter, and
ii) at least one user parameter is retrieved by retrieving at least one input of the user in the at least one query mask.

8. System (300) for the device-controlled treatment of at least one laboratory sample, comprising at least one laboratory apparatus according to any one of the preceding claims and at least one external data processing device, in particular a server, which are connected to one another for the exchange of data, in particular configuration data.

9. System according to claim 8, comprising at least a first and a second laboratory apparatus according to one of claims 1 to 7, which are each configured to process first user-dependent configuration data which can be used for user-dependent control of the first laboratory apparatus, and which can also be used for user-dependent control of the second laboratory apparatus.

10. System according to any of the preceding claims 8 or 9, comprising an external data processing device, and comprising a user interface device with which user-dependent configuration data can be generated from the user's input.

11. A method (200) of configuring a laboratory instrument according to any one of claims 1 to 7, the method comprising the steps of:
• Identifying a user using the access control of the control device; and
• Configuring the laboratory device or configuring a treatment using user-dependent configuration data.

## Revendications

1. Appareil de laboratoire (1, 1', 1") pour le traitement commandé par appareil d'au moins un échantillon de laboratoire, dans lequel l'appareil de laboratoire est sélectionné dans le groupe de l'un des appareils de laboratoire suivants : une centrifugeuse de laboratoire, un thermocycleur, un spectrophotomètre de laboratoire, un compteur de cellules, un incubateur de laboratoire, un agitateur de laboratoire, un congélateur de laboratoire, un bioréacteur, un établi de sécurité biologique, un appareil de lecture de plaque d'échantillons, un automate de laboratoire pour le traitement d'échantillons fluides, et
dans lequel l'appareil de laboratoire (1, 1', 1") présente :
- au moins un dispositif de traitement pour le traitement commandé par appareil du au moins un échantillon de laboratoire ;
- un dispositif de commande pour la commande dépendante d'un utilisateur de l'appareil de laboratoire, en particulier du dispositif de traitement, dans lequel
le dispositif de commande est aménagé pour, pendant le fonctionnement de l'appareil de laboratoire lors de l'établissement de la configuration manuelle par un utilisateur, saisir des données de configuration et les stocker dans un dispositif de stockage en tant que données de configuration dépendantes d'un utilisateur, pour permettre de transférer ces données de configuration depuis le dispositif de stockage vers un autre appareil de laboratoire lorsque l'utilisateur veut utiliser celles-ci sur un autre appareil de laboratoire, et
- une commande de configuration (100) pour la configuration de l'appareil de laboratoire dépendante d'un utilisateur, dans lequel la commande de configuration présente :
- au moins un dispositif d'interface pour la production d'une première liaison de données vers un dispositif d'interface utilisateur et pour la production d'une deuxième liaison de données vers le dispositif de commande de l'appareil de laboratoire, dans lequel le au moins un dispositif d'interface de la commande de configuration est conçu pour la production d'au moins une troisième liaison de données vers au moins un dispositif de traitement de données extérieur, en particulier un serveur, qui présente un dispositif de stockage dans lequel les données de configuration dépendantes d'un utilisateur peuvent être stockées et ;
un dispositif de commande de la commande de configuration qui présente une commande d'accès pour l'identification d'un utilisateur accédant via la première liaison de données et un dispositif de traitement de données pour le traitement de données de configuration dépendantes d'un utilisateur prédéfinies, dans lequel ces données de configuration peuvent être utilisées pour le traitement dépendant d'un utilisateur du au moins un échantillon de laboratoire,
dans lequel le dispositif de commande de la commande de configuration est aménagé pour
- identifier un utilisateur accédant,
- recevoir des données de configuration via la au moins une troisième liaison de données et
- transmettre à l'utilisateur identifié des données de configuration dépendantes d'un utilisateur attribuées via une deuxième liaison de données à l'appareil de laboratoire pour ainsi configurer celles-ci de façon dépendante d'un utilisateur,
dans lequel le dispositif de commande de l'appareil de laboratoire est aménagé pour
- recevoir les données de configuration dépendantes d'un utilisateur depuis la commande de configuration et
- commander l'appareil de laboratoire en fonction des données de configuration dépendantes d'un utilisateur, et
- en fonction de l'utilisateur identifié, utiliser les données de configuration dépendantes d'un utilisateur qui déterminent un ensemble de paramètres de programme dépendants d'un utilisateur avec lequel un traitement commandé par programme peut être commandé de façon dépendante d'un utilisateur au moyen du dispositif de traitement.

2. Appareil de laboratoire selon la revendication 1,
dans lequel le dispositif de commande de la commande de configuration est conçu pour
- exploiter les données de configuration reçues via la au moins une troisième liaison de données, et
- attribuer à l'utilisateur identifié des données de configuration dépendantes d'un utilisateur qui peuvent être utilisées pour le traitement dépendant d'un utilisateur du au moins un échantillon de laboratoire.

3. Appareil de laboratoire selon la revendication 1 ou 2,
dans lequel le dispositif de commande de la commande de configuration est conçu pour envoyer, à au moins un dispositif de traitement de données extérieur, et via la au moins une troisième liaison de données, des données d'identification qui identifient l'utilisateur, et pour recevoir, depuis le dispositif de traitement de données extérieur, les données de configuration attribuées à l'utilisateur identifié en tant que ces données de configuration dépendantes d'un utilisateur pour l'appareil de laboratoire.

4. Appareil de laboratoire selon l'une des revendications précédentes, qui présente
un dispositif d'interface utilisateur pour permettre à l'utilisateur identifié d'accéder à l'appareil de laboratoire, et
dans lequel la commande d'accès est aménagée pour permettre à l'utilisateur identifié d'accéder à l'appareil de laboratoire au moyen du dispositif d'interface utilisateur via la première liaison de données.

5. Appareil de laboratoire selon l'une des revendications précédentes, dans lequel la commande d'accès est aménagée pour permettre à l'utilisateur identifié d'accéder à l'appareil de laboratoire uniquement si au moins une condition d'accès prédéterminée concernant l'utilisateur identifié est satisfaite.

6. Appareil de laboratoire selon l'une des revendications précédentes, qui présente un dispositif d'interface utilisateur pour l'entrée de données par l'utilisateur et avec au moins un dispositif d'affichage pour l'affichage d'informations pour l'utilisateur dans au moins une interface utilisateur graphique, dans lequel le dispositif de commande de l'appareil de laboratoire est aménagé pour commander le dispositif d'affichage de telle sorte qu'en fonction de l'utilisateur identifié et en utilisant les données de configuration dépendantes d'un utilisateur une conception dépendante d'un utilisateur de l'interface utilisateur soit utilisée.

7. Appareil de laboratoire selon la revendication 6, dans lequel le dispositif de commande de l'appareil de laboratoire commande le traitement en fonction d'au moins un paramètre d'utilisateur sélectionné par un utilisateur et est conçu pour saisir au moins un paramètre d'utilisateur dans un processus de requête dépendant d'un utilisateur au moyen du dispositif d'interface utilisateur, en ce que
i) est affiché, dans l'interface utilisateur et à l'intention de l'utilisateur, au moins un masque de requête dépendant d'un utilisateur, dépendant d'une classe d'utilisateur, p. ex. une qualification, ou également dépendant d'un individu, dans lequel le masque de requête est une page d'affichage avec au moins une région d'affichage pour l'affichage de la valeur variable d'un paramètre de programme ou d'un paramètre d'utilisateur, et
ii) par la saisie d'au moins une entrée de l'utilisateur dans le au moins un masque de requête, au moins un paramètre d'utilisateur est saisi.

8. Système (300) pour le traitement commandé par appareil d'au moins un échantillon de laboratoire, présentant au moins un appareil de laboratoire selon l'une des revendications précédentes et au moins un dispositif de traitement de données extérieur, en particulier un serveur, qui sont reliés ensemble pour l'échange de données, en particulier de données de configuration.

9. Système selon la revendication 8, présentant au moins un premier et un second appareil de laboratoire selon l'une des revendications 1 à 7, qui sont respectivement aménagés pour traiter des premières données de configuration dépendantes d'un utilisateur qui peuvent être utilisées pour la commande dépendante d'un utilisateur du premier appareil de laboratoire, et qui peuvent également être utilisées pour la commande dépendante d'un utilisateur du second appareil de laboratoire.

10. Système selon l'une des revendications précédentes 8 ou 9, qui présente un dispositif de traitement de données extérieur, et qui présente un dispositif d'interface utilisateur avec lequel des données de configuration dépendantes d'un utilisateur peuvent être produites depuis les entrées de l'utilisateur.

11. Procédé (200) pour la configuration d'un appareil de laboratoire selon l'une des revendications 1 à 7, dans lequel le procédé présente les étapes de :
- identification d'un utilisateur au moyen de la commande d'accès du dispositif de commande ; et
- configuration de l'appareil de laboratoire ou configuration d'un traitement en utilisant des données de configuration dépendantes d'un utilisateur.
